# EUROPEAN PATENT SPECIFICATION

(11) **EP 4 296 027 B1**
(45) Date of publication and mention of the grant of the patent: **09.12.2026**
(21) Application number: 22756184.2
(22) Date of filing: 16.02.2022
(51) Int. Cl.: B29B 15/12, B29K 101/10, B29K 105/12, D02J 1/18, D04H 1/4242

(54) **SHEET MOLDING COMPOUND PRODUCTION METHOD, CARBON FIBER MAT DEPOSITION APPARATUS, AND SHEET MOLDING COMPOUND PRODUCTION APPARATUS**
VERFAHREN ZUR HERSTELLUNG EINER FORMVERBINDUNG, VORRICHTUNG ZUR ABLAGERUNG EINER KOHLENSTOFFFASERMATTE UND VORRICHTUNG ZUR HERSTELLUNG EINER FORMVERBINDUNG
PROCÉDÉ DE PRODUCTION D'UN COMPOSÉ DE MOULAGE EN FEUILLE, APPAREIL DE DÉPÔT DE MAT DE FIBRES DE CARBONE ET APPAREIL DE PRODUCTION DE COMPOSÉ DE MOULAGE EN FEUILLE

(30) Priority: 16.02.2021 JP 2021022590
(43) Date of publication of application: 27.12.2023
(60) Divisional application: 25154355.9 / 4 545 265
(73) Proprietor: Mitsubishi Chemical Corporation, Chiyoda-ku Tokyo 100-8251 (JP)
(72) Inventor: ODA, Kentaro, Tokyo 100-8251 (JP); WATANABE, Yasushi, Tokyo 100-8251 (JP); SAMEJIMA, Tadao, Tokyo 100-8251 (JP); MIZUTORI, Yukihiro, Tokyo 100-8251 (JP); KANEHAGI, Junji, Tokyo 100-8251 (JP)
(74) Representative: Hoffmann Eitle
(86) International application number: PCT/JP2022/006032
(87) International publication number: WO 2022/176866

(56) References cited:
- WO-A1-2020/067058
- WO-A1-2020/195756
- WO-A1-2021/149578
- WO-A1-2021/187346
- WO-A1-2021/193234
- WO-A1-2021/251205
- JP-A- 2019 065 405
- JP-A- 2019 119 148
- JP-A- 2022 029 523
- JP-A- H 054 246
- JP-A- H0 542 537
- JP-A- H0 716 836
- US-A1- 2020 340 146

## Description

### [Technical Field]

The present invention mainly relates to a method of manufacturing a sheet molding compound (SMC) and, in particular, to a method for manufacturing an SMC using carbon fibers (CF-SMC) as reinforcing fibers.

The present invention also relates to a carbon fiber mat deposition apparatus able to be suitably used for CF-SMC production and to an SMC manufacturing apparatus including the above.

### [Background Art]

Carbon fiber reinforced plastic (CFRP) is a lightweight material with excellent mechanical properties suitable for parts of automobiles, ships, railroad vehicles, manned aircraft, unmanned aircraft, and other transportation equipment, the importance of which has increased steadily in recent years.

In order to improve the production efficiency of CFRP products, an intermediate material in which a reinforcement comprising carbon fiber is impregnated in advance with a matrix resin, that is, a carbon fiber prepreg, has been developed.

A CF-SMC is a type of carbon fiber prepreg and, in the production steps thereof, a carbon fiber mat is formed from chopped carbon fiber bundles, which are produced by supplying a continuous carbon fiber bundle to a chopper and cutting it.

Techniques for depositing the carbon fiber mat with a uniform areal fiber weight on a traveling carrier film have been investigated (Patent Document 1 and Patent Document 2).

US 2020/340146 A1 concerns a reinforcing fiber mat manufacturing apparatus. A guide roller, a nip roller and a cutter roller are arranged above a sheet member. A hitting mechanism is arranged between cutter roller and sheet member. Dispersion booth partition plates are provided in a dispersion booth. The partition plates partition a space across the width of the sheet member. The rotation axis of the cutter roller extends across the width of the sheet member.

JP H05 4246 A concerns the manufacture of a fiber composite sheet. A fiber composite sheet manufacturing apparatus includes a rewind roll around which a reinforcing fiber bundle is wound, and a tank disposed in front of the roll and filled with a powdered thermoplastic resin. A pair of upper and lower scrapers is disposed in front of a fluidized bed apparatus, and a widening means is disposed in front of the scraper. A take-up drive roll and a pinch roll are arranged in front of the widening means.

JP H05 42537 A concerns the manufacture of a fiber composite sheet. In a fiber composite sheet manufacturing apparatus, a rotating roll having a plurality of fins provided at predetermined intervals is used.

### [Citation List]

### [Patent Documents]

[Patent Document 1]
   PCT International Publication No. WO 2019/142851
[Patent Document 2]
   PCT International Publication No. WO 2021/010084

### [Summary of Invention]

### [Technical Problem]

The main objective of the present invention is to provide a technique useful in manufacturing a CF-SMC having improved areal fiber weight uniformity.

In the present specification, problems that are solvable by each embodiment of the present invention may be explicitly or implicitly disclosed.

### [Solution to Problem]

To solve the above-described technical problem, a method of manufacturing a sheet molding compound according to one aspect the present invention, which is defined in claim 1,
comprises (i) drawing out a carrier film from a roll and causing the carrier film to travel such that a width direction of the carrier film is maintained to be horizontal, (ii) when a direction being horizontal and being perpendicular to a travel direction of the carrier film is denoted as a T direction, supplying a plurality of continuous carbon fiber bundles arranged in parallel to each other to a chopper comprising a cutter roll having a rotation axis parallel to the T direction, and cutting each of the continuous carbon fiber bundles using the chopper, (iii) depositing a carbon fiber mat by allowing chopped carbon fiber bundles produced by the cutting to fall onto the carrier film, after fragmentation-processing them using a fragmentation-processing apparatus which is arranged below the chopper, (iv) impregnating the carbon fiber mat with a thermosetting resin composition, and (v) arranging a partition partitioning a space along the T direction, the space being that through which the fragmentation-processed chopped carbon fiber bundles fall, wherein, in at least a part of the partition, a normal line is inclined from the T direction in a horizontal plane, and wherein the partition is a flat plate and, in at least a part of the partition, a thickness direction thereof is inclined from the T direction, a normal line of the partition being inclined from the T direction in a horizontal plane.

An angle of the inclination may be 1° or more, 5° or more, 10° or more, 15° or more, or 20° or more.

The angle of the inclination may be 45° or less, 40° or less, or 35° or less.

The fragmentation-processing apparatus may comprise a pin roll or a cage roll, and the pin roll or the cage roll has a rotation axis parallel to the T direction.

The fragmentation-processing apparatus may have a first pin roll and a second pin roll, which are arranged side by side in a direction perpendicular to the T direction and have each a rotation axis parallel to the T direction, and the partition may have a part sandwiched between a vertical plane including the rotation axis of the first pin roll and a vertical plane including the rotation axis of the second pin roll.

A plurality of the partitions may be lined up along the T direction.

All of the partitions may be arranged inside an enclosure.

At least a part of the enclosure may be corrugated such that a horizontal cross-section has a wave shape.

Before depositing the carbon fiber mat on the carrier film, a resin paste comprising a thermosetting resin composition may be applied to an upper surface of the carrier film, and after depositing the carbon fiber mat, another carrier film in which another resin paste comprising a thermosetting resin composition is applied to one surface may be overlapped on an upper surface side of the carrier film to form a laminate, and, further, the laminate may be subjected to pressing.

A carbon fiber mat deposition apparatus according to another aspect of the present invention, as defined in claim 9, comprises a carrier film travel path, a chopper arranged above the travel path, a fragmentation-processing apparatus arranged between the chopper and the travel path, and a partition by which a space between the fragmentation-processing apparatus and the travel path is partitioned along a T direction, wherein, when a direction being horizontal and being perpendicular to the travel path is the T direction, the chopper comprises a cutter roll having a rotation axis parallel to the T direction, and, in at least a part of the partition, a normal line is inclined from the T direction in a horizontal plane. The partition is a flat plate and, in at least a part of the partition, a thickness direction thereof is inclined from the T direction, a normal line of the partition being inclined from the T direction in a horizontal plane.

An angle of the inclination may be 1° or more, 5° or more, 10° or more, 15° or more, or 20° or more.

An angle of the inclination may be 45° or less, 40° or less, or 35° or less.

The fragmentation-processing apparatus may comprise a pin roll or a cage roll, and the pin roll or the cage roll may have a rotation axis parallel to the T direction.

The fragmentation-processing apparatus may have a first pin roll and a second pin roll, which are arranged side by side in a direction perpendicular to the T direction and have each a rotation axis parallel to the T direction, and the partition may have a part sandwiched between a vertical plane including the rotation axis of the first pin roll and a vertical plane including the rotation axis of the second pin roll.

A plurality of the partitions may be lined up along the T direction.

All of the partitions may be arranged inside an enclosure.

at least part of the enclosure may be corrugated such that a horizontal cross-section has a wave shape.

A sheet molding compound manufacturing apparatus according to another aspect of the present invention is defined in claim 16 and comprises the above carbon fiber mat deposition apparatus.

The sheet molding compound manufacturing apparatus may further comprise two applicators, a mechanism for laminating two carrier films, and an impregnating machine.

### [Advantageous Effects of Invention]

The present invention provides a technique useful for manufacturing a CF-SMC having improved areal fiber weight uniformity.

### [Brief Description of Drawings]

FIG. 1 is a plan view showing a continuous carbon fiber bundle partially split into five parts.
FIG. 2 is a cross-sectional view showing a continuous carbon fiber bundle partially split into five parts.
FIG. 3 is a schematic diagram of an SMC manufacturing apparatus.
FIG. 4 is a schematic diagram of a chopper.
FIG. 5 is a schematic diagram of a fragmentation-processing apparatus.
FIG. 6 is a schematic diagram of pin rolls provided in the fragmentation-processing apparatus.
FIG. 7 shows a part of a plane development of the circumferential surface of a pin roll.
FIG. 8 is a schematic diagram showing the positional relationship and the like of two pin rolls provided in the fragmentation-processing apparatus.
FIG. 9 is a schematic diagram for illustrating the operation of the lower partition. In each of FIGS. 9(a) and 9(b), the travel direction of the first carrier film 41 is perpendicular to the paper surface.
FIG. 10 shows the positional relationship and the like between the fragmentation-processing apparatus, the first carrier film, and the lower partition.
FIG. 11 is a plan view showing a plurality of lower partitions perpendicular to the T direction being lined up along the T direction.
FIG. 12 is a plan view showing a plurality of lower partitions perpendicular to the T direction being lined up along the T direction.
FIG. 13 shows an embodiment in which the lower partitions are arranged inside the enclosure.
FIG. 14 shows the positional relationship and the like between the chopper, the fragmentation-processing apparatus, the first carrier film, the lower partition, and the upper partition.
FIG. 15 is a schematic diagram of a comb.
FIG. 16 is a histogram showing the filament number distribution of chopped carbon fiber bundles in a carbon fiber mat.
FIG. 17 is a histogram showing the filament number distribution of chopped carbon fiber bundles in a carbon fiber mat.
FIG. 18 is a histogram showing the filament number distribution of chopped carbon fiber bundles in a carbon fiber mat.
FIG. 19 is a histogram showing the filament number distribution of chopped carbon fiber bundles in a carbon fiber mat.
FIG. 20 is a diagram illustrating the pitch between continuous carbon fiber bundles when arranged in parallel to be supplied to a chopper.
FIG. 21 is a plan view showing the arrangement of six compartments of a partition box and the directions when the partition box is placed on the carrier film.
FIG. 22(a) shows the positional relationship between the partition box and side covers and FIG. 22(b) shows the positional relationship between the partition box, side covers, and lower partitions. In each of FIGS. 22(a) and 22(b), the travel direction of the carrier film is perpendicular to the paper surface.
FIG. 23 shows the positional relationship and the like between the chopper, the fragmentation-processing apparatus, the first carrier film, the lower partition, and the upper partition.
FIGS. 24(a) to 24(c) show corrugated plates in which the horizontal cross-sections are sine waves, triangular waves, and trapezoidal waves, respectively.
FIG. 25 is a plan view showing a plurality of lower partitions each with the normal line inclined from the T direction in the horizontal plane being lined up along the T direction, in accordance with the claimed invention.
FIG. 26 is a schematic diagram showing a cage roll.

### [Description of Embodiments]

### 1. Method of manufacturing a Sheet Molding Compound (SMC)

One method of manufacturing an SMC includes the following (i) to (v).
(i) Drawing out a carrier film from a roll and causing the carrier film to travel such that a width direction of the carrier film is maintained to be horizontal.
(ii) When a direction being horizontal and being perpendicular to the travel direction of the carrier film is denoted as a T direction, supplying a plurality of continuous carbon fiber bundles arranged in parallel to each other to a chopper comprising a cutter roll having a rotation axis parallel to the T direction, and cutting each of the continuous carbon fiber bundles using the chopper to a predetermined length in a range of 5 mm to 60 mm.
(iii) Depositing a carbon fiber mat by allowing chopped carbon fiber bundles produced by the cutting to fall onto the carrier film, after fragmentation-processing them using a fragmentation-processing apparatus A which is arranged below the chopper; the fragmentation-processing apparatus A has a first pin roll and a second pin roll, which are arranged side by side in a direction perpendicular to the T direction and have each a rotation axis parallel to the T direction, the first pin roll is driven to rotate such that pins move downward from above on a side facing the second pin roll, and the second pin roll is driven to rotate such that pins move downward from above on a side facing the first pin roll.
(iv) Impregnating the carbon fiber mat with a thermosetting resin composition.
(v) Arranging a lower partition perpendicular to the T direction below the fragmentation-processing apparatus.

A detailed description will be given below of the method of manufacturing an SMC according to the present embodiment using specific examples.

### 1.1. Continuous Carbon Fiber Bundle

The continuous carbon fiber bundle used in the method of manufacturing an SMC of the present embodiment preferably comprises PAN (polyacrylonitrile)-based carbon fiber filaments and the filament number per bundle is not limited, but is 3K to 100K, for example. Here, NK means N x 1,000. Thus, 3K to 100K is, in other words, 3,000 to 100,000.

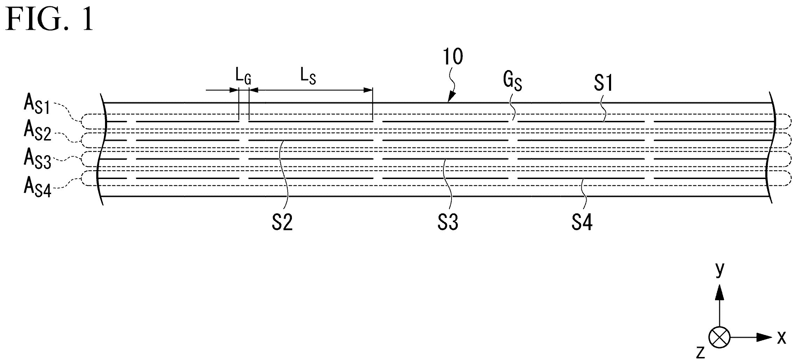

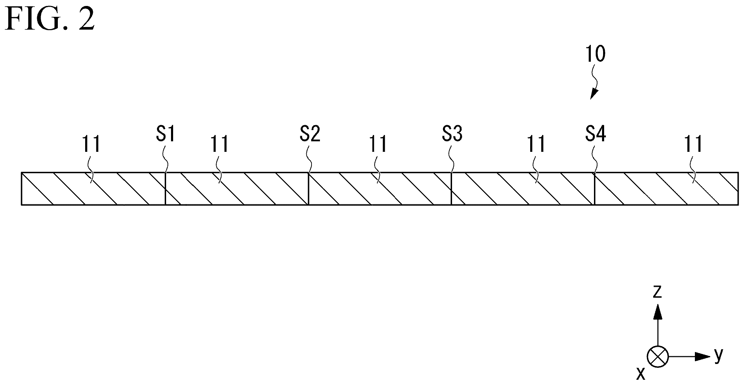

The continuous carbon fiber bundle is not limited, but may be partially split in advance into a plurality of sub-bundles, as shown by the examples in FIG. 1 and FIG. 2.

In FIG. 1 and FIG. 2, a continuous carbon fiber bundle 10 having a flat shape is partially split into five sub-bundles 11 by slitting. For convenience, the fiber direction (longitudinal direction) of the fiber bundle is the x direction, the width direction is the y direction, and the thickness direction is the z direction, FIG. 1 is a plan view in which the continuous carbon fiber bundle 10 is seen from the z direction, and FIG. 2 shows a cross-section of the continuous carbon fiber bundle 10 perpendicular to the x direction (the cross-section when cut in the y-z plane).

As shown in FIG. 1, four slit rows are formed in the continuous carbon fiber bundle 10 which are a first slit row A_{S1}, a second slit row A_{S2}, a third slit row A_{S3}, and a fourth slit row A_{S4}.

The first slit row A_{S1} comprises a plurality of first slits S1 lined up in the x direction.

The second slit row A_{S2} comprises a plurality of second slits S2 lined up in the x direction.

The third slit row A_{S3} comprises a plurality of third slits S3 lined up in the x direction.

The fourth slit row A_{S4} comprises a plurality of fourth slits S4 lined up in the x direction.

The slit length L_{S} and the inter-slit gap length L_{G} are constant within any of the slit rows and are also common between different slit rows.

The ratio L_{S}/(L_{S} + L_{G}) of the slit length L_{S} to the sum of the slit length L_{S} and the inter-slit gap length L_{G} is usually 90% or more, preferably 95% or more, and may be 99%, for example. Accordingly, the continuous carbon fiber bundle 10 is split into five sub-bundles 11 in most parts, as shown in FIG. 2.

The positions of the first slit row A_{S1}, second slit row A_{S2}, third slit row A_{S3}, and fourth slit row A_{S4} in the y direction are set such that the widths of the five sub-bundles 11 are generally the same. For example, when the filament number of the continuous carbon fiber bundle 10 is 15K, the filament number of each sub-bundle 11 is 3K±0.5K.

The slit length L_{S} is not limited, but longer than 100 mm is preferable and longer than 500 mm is more preferable.

It is possible for the slit length L_{S} to be, for example, more than 25 mm to 50 mm or less, more than 50 mm to 100 mm or less, more than 100 mm to 200 mm or less, more than 200 mm to 500 mm or less, more than 500 mm to 1,000 mm or less, more than 1,000 mm to 1,500 mm or less, more than 1,500 mm to 2,000 mm or less, more than 2,000 mm to 3,000 mm or less, or the like.

The inter-slit gap length L_{G} is not limited, but may be 1 mm to 10 mm, for example.

The positions of the inter-slit gaps G_{S} in the x direction are preferably coincident between all slit rows as in the example shown in FIG. 1, but may not be.

The above is not limited to when the number of sub-bundles formed by partially splitting the continuous carbon fiber bundle 10 is five, but also applies when four or fewer or six or more.

The filament number in the sub-bundle formed by splitting the continuous carbon fiber bundle 10 is preferably 15K or less, more preferably 10K or less, even more preferably 5K or less and may be 4K or less, or 3K or less, without being related to the number of sub-bundles to be formed. The filament number in a sub-bundle is not limited, but is preferably greater than 0.5K.

### 1.2. Manufacturing Apparatus

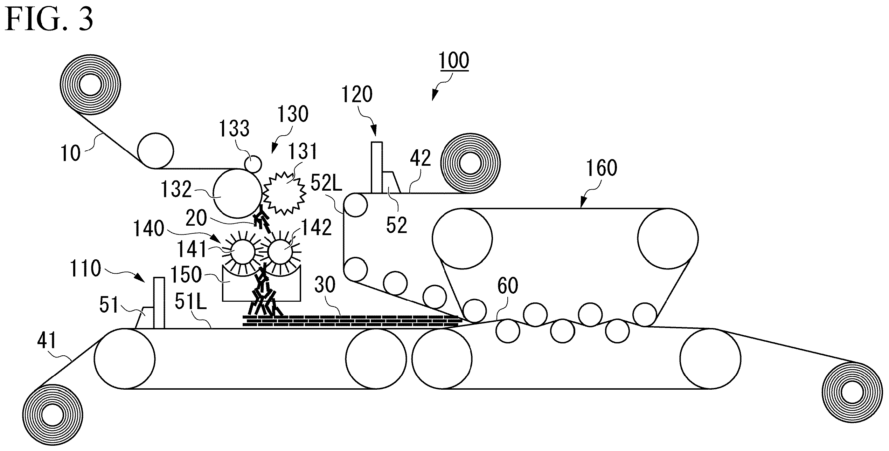

A conceptual diagram of an SMC manufacturing apparatus able to be preferably used when producing an SMC using the method of manufacturing an SMC of the present embodiment is shown in FIG. 3.

Referring to FIG. 3, the SMC manufacturing apparatus 100 has a first applicator 110, a second applicator 120, a chopper 130, a fragmentation-processing apparatus 140, a lower partition 150, and an impregnating machine 160.

Both the first carrier film 41 and the second carrier film 42, which are drawn out from different rolls, are always maintained to be horizontal in the width direction.

The first applicator 110 is used to apply a first resin paste 51 to the first carrier film 41 to form a first resin paste layer 51L.

The second applicator 120 is used to apply a second resin paste 52 to the second carrier film 42 to form a second resin paste layer 52L.

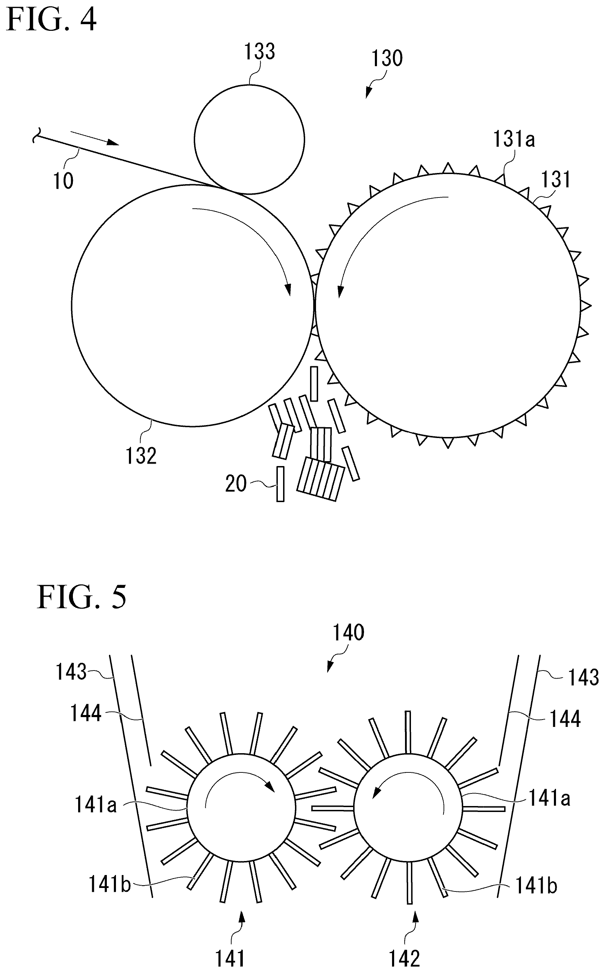

The chopper 130 comprises a cutter roll 131, a receiving roll (rubber roll) 132, and a guide roll 133, as shown in FIG. 4. On the outer circumference of the cutter roll 131, a plurality of cutting blades 131a, each extending in the direction of the rotation axis of the cutter roll 131, are arranged at regular intervals in the circumferential direction. The direction in which the cutting blades 13 1a extend may be inclined with respect to the direction of the rotation axis of the cutter roll 131.

The rotation axes of the cutter roll 131, the receiving roll 132, and the guide roll 133 are all parallel to the T direction.

The T direction is a direction being horizontal and being perpendicular to the travel direction of the first carrier film 41. In FIG. 3, the T direction is perpendicular to the paper surface. The width direction of the first carrier film 41 traveling below the chopper 130 is also parallel to the T direction.

When a plurality of continuous carbon fiber bundles 10 are arranged to be parallel to each other and supplied to the chopper 130 from a direction intersecting the rotation axis of the cutter roll 131, chopped carbon fiber bundles 20 having a constant fiber length are cut out one after another from each of the plurality of continuous carbon fiber bundles.

The fragmentation-processing apparatus 140 is provided with a pair of pin rolls both having rotation axes parallel to the T direction, that is, a first pin roll 141 and a second pin roll 142.

The first pin roll 141 and the second pin roll 142 are arranged side by side in a direction perpendicular to the T direction.

In the example shown in FIG. 5, the fragmentation-processing apparatus 140 is provided with covers 143 and a guide plate 144 arranged in the inside thereof, but may not be.

The objective of the fragmentation-processing performed by the fragmentation-processing apparatus 140 is to split one chopped carbon fiber bundle 20 into two or more fiber bundles by striking with a pin roll, thereby increasing the ratio of chopped carbon fiber bundles comprising a smaller number of fiber filaments, which are included in the carbon fiber mat 30 deposited on the first carrier film 41. In the fragmentation-processing, it is not necessary for all of the chopped carbon fiber bundles produced by the cutting of the continuous carbon fiber bundles to be split into two or more fiber bundles each. Some of the chopped carbon fiber bundles may pass through the fragmentation-processing apparatus without being split into two or more fiber bundles.

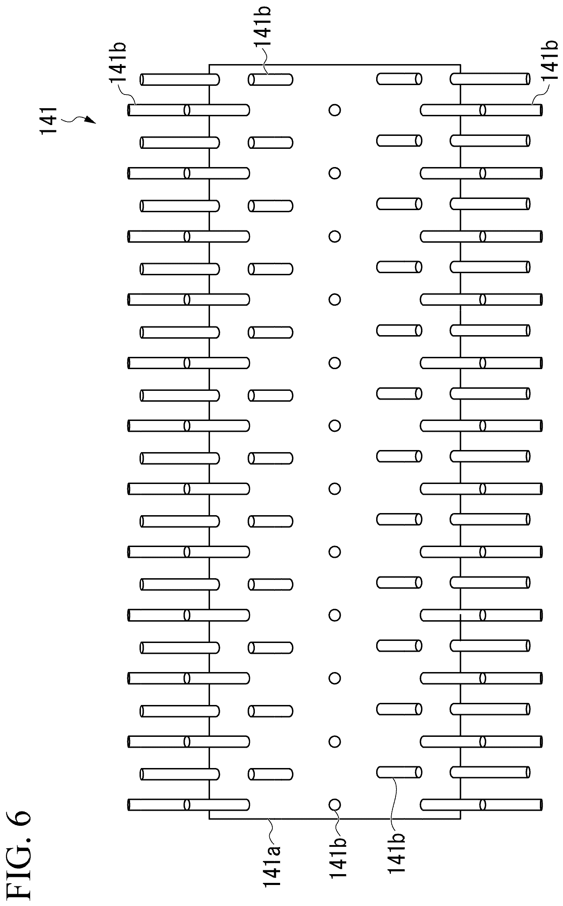

As shown in FIG. 6, the first pin roll 141 has a cylinder 141a and a plurality of pins 141b arranged on the circumferential surface of the cylinder 141a. The plurality of pins 141b preferably all have the same shape and dimensions as each other.

The cylinder 141a and the pins 141b are both rigid bodies and are formed, for example, of a metal material. Examples of metal materials include steel, stainless steel, and aluminum alloys, without being limited thereto.

The diameter of the cylinder 141a is not limited, but may be, for example, 60 mm to 150 mm.

The pins 141b extend perpendicularly to the rotation axis of the first pin roll 141 and have, for example, a cylindrical shape, without being limited thereto. The boundary between the end surface and the circumferential surface of the pins 141b may be chamfered.

The diameter of the pins 141b is not limited, but may be, for example, 1 mm to 5 mm.

The length L_{P1} of the pins 141b, that is, the distance from the pin tip to the base, is not limited, but may be, for example, 10 mm to 50 mm.

In a plane development of the circumferential surface of the cylinder 141a, the arrangement of the pins 141b on the circumferential surface preferably overlaps with the original arrangement when shifted 5 mm to 20 mm in the axial direction and 4 mm to 30 mm in the circumferential direction.

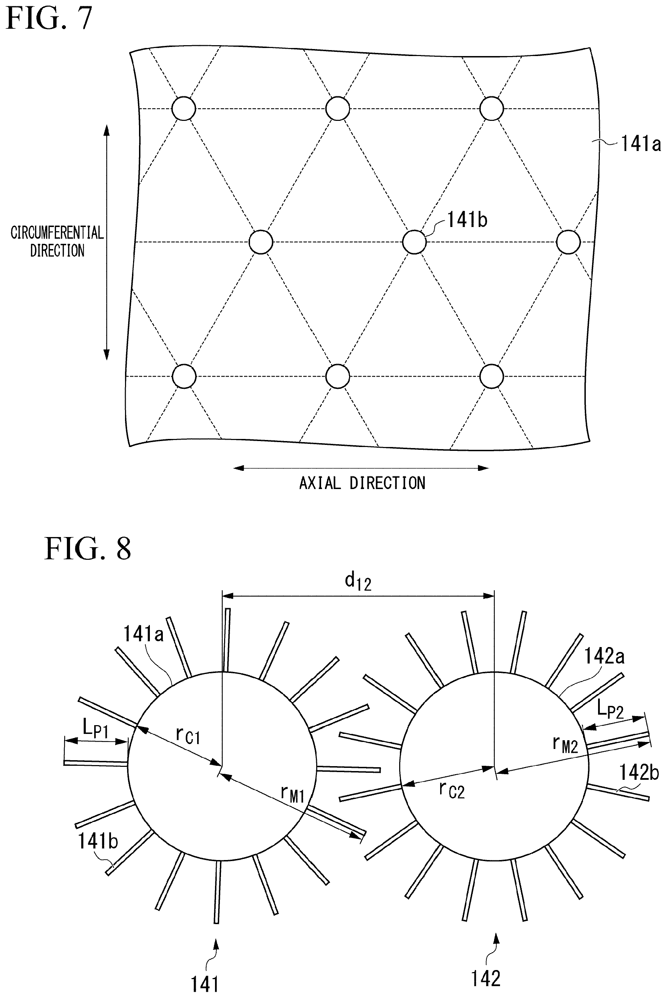

For example, in the case of the first pin roll 141 shown in FIG. 6, in a plane development of the circumferential surface of cylinder 141a, the pins 141b are arranged at each vertex of tessellating equilateral triangles (displayed with dashed lines) each having one side parallel to the axial direction, as shown in FIG. 7. When the length of one side of this equilateral triangle is, for example, 5 mm, the arrangement of the pins 141b shown in FIG. 7 overlaps with the original arrangement when shifted in the axial direction by 2.5 mm and approximately 4.3 mm in the circumferential direction.

In the present specification, the maximum radius of a pin roll is defined as the distance from the rotation axis thereof to the pin tip. In the first pin roll 141, the radius of the cylinder 141a is preferably half or more of the maximum radius of the first pin roll 141 and more preferably 75% or more. This is because the higher the ratio of the cylinder radius to the maximum radius of the pin roll, the smaller the difference between the circumferential speed at the pin tip and the circumferential speed at the base of the pin when the pin roll is rotating.

In one example, it is possible to use a magnetic body for the material of the pins 141b. The pins 141b are firmly fixed to the cylinder 141a so as to prevent falling out during production, but even when a situation occurs in which the pins 141b do fall out and get mixed into the CF-SMC, when the pins 141b include a magnetic body, it is possible to easily find the pins 141b using a magnetic sensor type metal detector.

Suitable examples of magnetic bodies include steel and magnetic stainless steels.

Among various stainless steels, austenitic stainless steels belonging to chromium-nickel stainless steels (typical steel grades are 18Cr-8Ni stainless steels such as SUS304 of the Japanese Industrial Standards) do not have a magnetic property.

On the other hand, austenitic ferritic stainless steels belonging to chromium-nickel stainless steels (typical steel grades are SUS329J1 and SUS329J4L of the Japanese Industrial Standards), ferritic stainless steels belonging to chromium stainless steels (typical steel grades are 18 Cr stainless steels such as SUS430 of the Japanese Industrial Standards), martensitic stainless steels (typical steel grades are 13Cr stainless steels such as SUS410 of the Japanese Industrial Standards), and precipitation hardening stainless steels (typical steel grades are SUS630 and SUS631 of the Japanese Industrial Standards) are magnetic bodies.

All of the above regarding the first pin roll 141 also applies to the second pin roll 142.

Without imposing any limitation, in order to reduce the cost of designing, manufacturing, and maintaining the fragmentation-processing apparatus 140, it is preferable to match the design and specifications of the first pin roll 141 and the second pin roll 142 in as many items as possible, including axial direction length, maximum radius, cylinder diameter, pin shape, dimensions, number, and arrangement, as well as the cylinder and pin materials.

When a greater number of the chopped carbon fiber bundles 20 pass between the first pin roll 141 and the second pin roll 142, in order for the chopped carbon fiber bundles 20 to be struck by the pins of these pin rolls, as shown in FIG. 8, the sum of the maximum radius r_{M1} of the first pin roll 141 and the maximum radius r_{M2} of the second pin roll 142 is preferably greater than the distance d₁₂ between the rotation axes of these two pin rolls.

The sum of the maximum radius r_{M1} of the first pin roll 141 and a cylinder radius r_{C2} of the second pin roll 142 and the sum of the cylinder radius r_{C1} of the first pin roll 141 and the maximum radius r_{M2} of the second pin roll are both smaller than the distance d₁₂ between the rotation axes of the two pin rollers.

In one example, the distance d₁₂ between the rotation axes of the first pin roll 141 and the second pin roll 142 may be variable. That is, it is possible to configure the fragmentation-processing apparatus 140 such that the position of one or both of the rotation axes of the first pin roll 141 and the second pin roll 142 is able to be moved horizontally along the travel direction of the first carrier film 41.

Both the first pin roll 141 and the second pin roll 142 are driven to rotate by a driving mechanism (not shown). As shown in FIG. 5, the first pin roll 141 rotates such that the pins 141b move downward from above on the side facing the second pin roll 142, and the second pin roll 142 rotates such that pins 142b move downward from above on the side facing the first pin roll 141.

Rotating both the first pin roll 141 and the second pin roll 142 is advantageous in ensuring that the chopped carbon fiber bundle 20 does not become jammed between these two pin rolls.

It is possible to independently control the rotation speeds of the first pin roll 141 and the second pin roll 142.

In the first pin roll and second pin roll, the longer the pins, the higher the density of pins on the cylinder surface, and the higher the circumferential speed, the greater the efficiency of the fragmentation-processing. In addition, the longer the pins, the higher the density of pins on the cylinder surface, and the higher the circumferential speed, the stronger the airflow generated by the rotation of these pin rolls.

In a preferable example, the length of the pins, the density of the pins on the cylinder surface, and the circumferential speed in the first pin roll and second pin roll are adjusted such that the generated airflow is as weak as possible in a range where the efficiency of the fragmentation-processing is not significantly decreased.

The fragmentation-processing apparatus 140 is arranged directly under the chopper 130 such that the chopped carbon fiber bundle 20 produced by the cutting of the continuous carbon fiber bundle 10 by the chopper 130 passes between the first pin roll 141 and the second pin roll 142 and falls on the first carrier film 41. Preferably, the cutter roll 131 and the receiving roll 132 are in contact directly above the gap between the cylinder 141a of the first pin roll and a cylinder 142a of the second pin roll.

The lower partition 150 perpendicular to the T direction is arranged below the fragmentation-processing apparatus 140. The lower partition 150 is a flat plate and the thickness direction thereof is parallel to the T direction. In other words, the normal line of the lower partition 150 is parallel to the T direction.

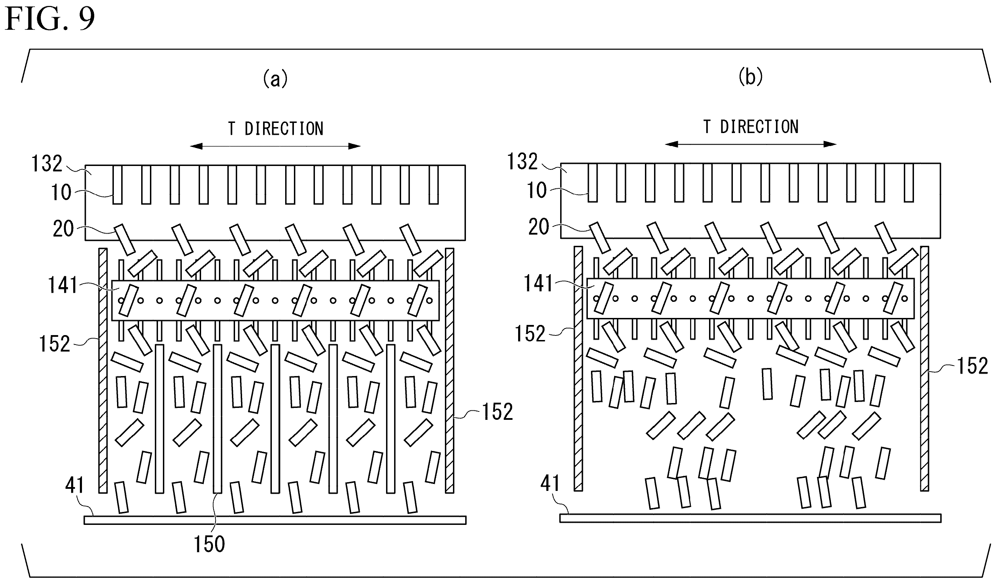

As shown in FIG. 9(a), when the space below the fragmentation-processing apparatus 140 is partitioned into a plurality of regions along the T direction by one or more of the lower partitions 150, the movement of the chopped carbon fiber bundle 20 along the T direction in this space is restricted in each region. As a result, when a plurality of continuous carbon fiber bundles 10 are supplied to the chopper 130 such that the number of those to be cut per axial direction length of the cutter roll 131 is constant, the amount of chopped carbon fiber bundles 20 falling on the first carrier film 41 per unit time can be uniform along the T direction. As a result, the areal weight of the carbon fiber mat 30 deposited on the first carrier film 41 becomes uniform in the T direction.

In contrast, when the lower partitions 150 are not arranged, the movement of the chopped carbon fiber bundle 20 in the T direction in the space below the fragmentation-processing apparatus 140 is not restricted, thus, the amount of chopped carbon fiber bundle 20 falling on the first carrier film 41 per unit time varies significantly along the T direction due to the influence of the airflow produced by the rotation of the first pin roll 141 and the second pin roll 142, as schematically shown in FIG. 9(b).

The lower partitions 150 may preferably be metal plates, without being limited thereto. The lower partitions 150 may be perforated plates or nets, as long as the movement of the chopped carbon fiber bundle 20 is impeded.

It is desirable for the lower partitions 150 to have enough strength to not flap in the airflow produced by the rotation of the first pin roll 141 and the second pin roll 142, but being excessively thick is not desirable. For example, when metal plates are used for the lower partitions 150, the thickness thereof is preferably 5 mm or less, and more preferably 3 mm or less.

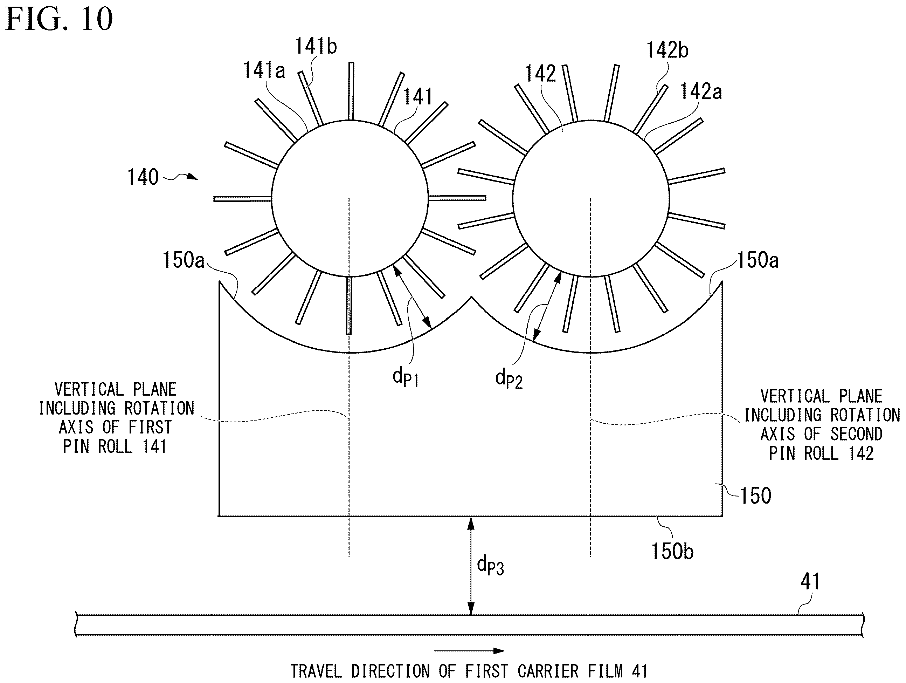

Referring to FIG. 10, a preferred embodiment for arranging the lower partition 150 will be explained as follows.

First, the lower partition 150 preferably extends along the travel direction of the first carrier film 41 so as to intersect both a vertical plane including the rotation axis of the first pin roll 141 and a vertical plane including the rotation axis of the second pin roll 142. This is because most of the chopped carbon fiber bundles 20 falling on the first carrier film 41 fall through the region sandwiched between these two vertical planes.

Second, at any location on an upper edge 150a of the lower partition 150, a distance d_{P1} from the circumferential surface of the cylinder 141a of the first pin roll is preferably greater than the length L_{P1} of the pin 141b of the first pin roll, and a distance d_{P2} from the circumferential surface of the cylinder 142a of the second pin roll is preferably greater than the length L_{P2} of the pins 142b of the second pin roll. The difference between the distance d_{P1} and the length L_{P1} of the pins 141b of the first pin roll and the difference between the distance d_{P2} and the length L_{P2} of the pins 142b of the second pin roll are preferably both 0.1 cm or more and more preferably 0.5 cm or more.

When the pin rolls are rotated, the pin tips of the pin rolls and the upper edge of the lower partition are preferably always separated by 0.1 cm or more and more preferably 0.5 cm or more, so as to avoid fuzz due to strong shear forces caused by the chopped carbon fiber bundles being sandwiched between the pin rolls and the lower partition and to avoid the chopped carbon fiber bundles becoming jammed between the pin rolls and the lower partition.

Furthermore, at least between the vertical plane including the rotation axis of the first pin roll 141 and the vertical plane including the rotation axis of the second pin roll 142, at least one of the following first condition and second condition is able to be satisfied at any location on the upper edge 150a of the lower partition 150.

First condition: the distance d_{P1} from the circumferential surface of the cylinder 141a of the first pin roll is less than the length L_{P1} of the pins 141b of the first pin roll plus 3 cm, preferably less than L_{P1} plus 2 cm, and more preferably less than L_{P1} plus 1.2 cm.

Second condition: the distance d_{P2} from the cylinder 142a of the second pin roll is less than the length L_{P2} of the pins 141b of the second pin roll plus 3 cm, preferably less than L_{P2} plus 2 cm, and more preferably less than L_{P2} plus 1.2 cm.

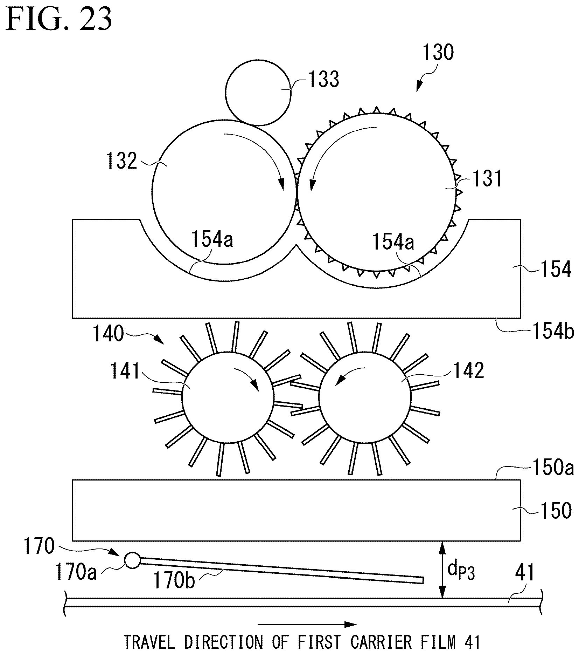

As another example, when the distance d₁₂ between the rotation axes of the first pin roll 141 and the second pin roll 142 is variable, all or a part of the upper edge 150a of the lower partition 150 may be made to be horizontal such that one or both of the first pin roll 141 and the second pin roll 142 can be moved horizontally along the travel direction of the first carrier film 41. In the example shown in FIG. 23, all of the upper edge 150a of the lower partition 150 is horizontal.

Third, at least between the vertical plane including the rotation axis of the first pin roll 141 and the vertical plane including the rotation axis of the second pin roll 142, at any location on a lower edge 150b of the lower partition 150, a distance d_{P3} to the first carrier film 41 is preferably 20 cm or less, more preferably 15 cm or less, and even more preferably 10 cm or less.

The distance d_{P3} may be set to, for example, 5 cm or more such that it is possible to have a sufficient gap between the lower edge 150b of the lower partition and the carbon fiber mat deposited on the first carrier film 41.

In the example of FIG. 10, the front edge of the lower partition 150, that is, the edge on the travel direction side of the first carrier film 41, and the rear edge of the lower partition 150, that is, the edge on the opposite direction side to the travel direction of the first carrier film 41, are both straight and vertical. Such a configuration is preferable, but not required.

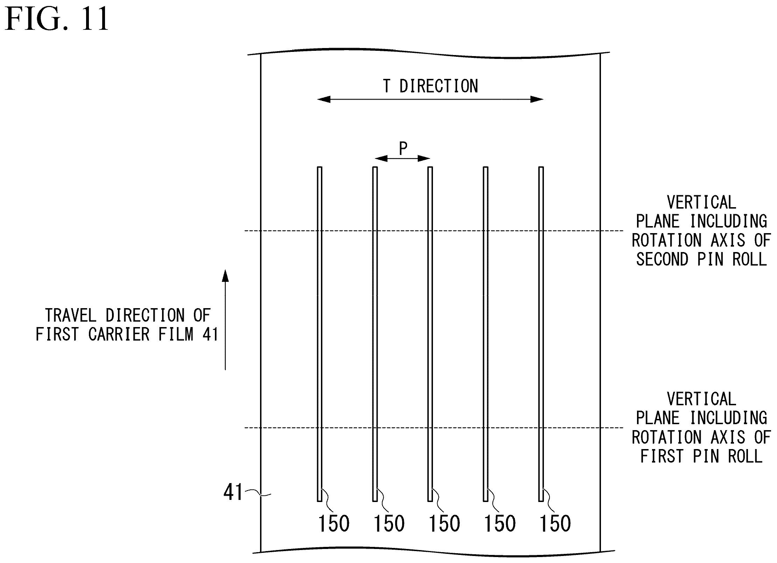

As shown in FIG. 11, a plurality of the lower partitions 150 are preferably lined up along the T direction. This is because, by doing so, the range of the movement of the chopped carbon fiber bundles along the T direction during falling toward the first carrier film 41 is narrower.

The pitch P of the plurality of the lower partitions 150 lined up along the T direction is preferably 20 cm or less, more preferably 15 cm or less, even more preferably 10 cm or less, and may be 7.5 cm or less or 5 cm or less.

The pitch P is preferably two or more times as long as the fiber length of the chopped carbon fiber bundle 20 produced when the continuous carbon fiber bundle 10 is cut by the chopper 130 and more preferably three or more times as long. Setting the pitch P in this manner makes it more difficult for the chopped carbon fiber bundles to be oriented along the lower partition 150 when being deposited on the first carrier film 41.

In order to make it difficult for the chopped carbon fiber bundle to be oriented along the lower partition 150, the lower partition 150 may be corrugated such that the horizontal cross-section has a wave shape at least in part, preferably, at least in a part sandwiched between the vertical plane including the rotation axis of the first pin roll 141 and the vertical plane including the rotation axis of the second pin roll 142. When the lower partition 150 is corrugated, the orientation of the chopped carbon fiber bundles 20 falling after impacting or contacting the lower partition 150 changes in various ways depending on the manner of impact or contact, thus, in the carbon fiber mat 30 deposited on the first carrier film 41, it is difficult to lose the randomness of the fiber bundle orientation.

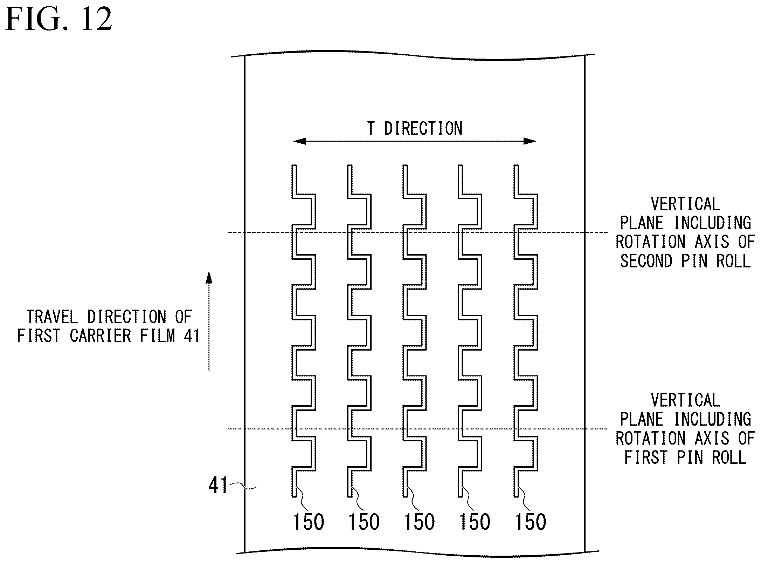

An example in which the lower partition 150 is corrugated such that the horizontal cross-section has a rectangular waveform is shown in FIG. 12. The corrugation is not limited to a rectangular wave, but may be a sine wave, a triangular wave, a trapezoidal wave, or the like.

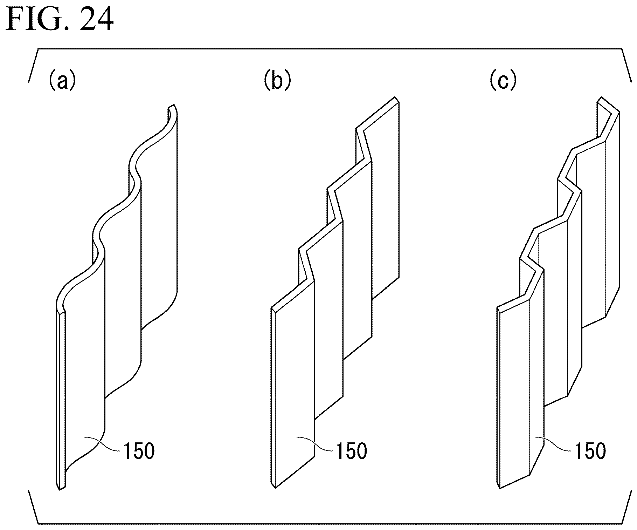

FIGS. 24(a) to 24(c) show examples of wave plates in which the shape of the horizontal cross-section is a sine wave, a triangular wave, and a trapezoidal wave, respectively.

It is possible to set the pitch and height of the corrugation to be the same as the fiber length of the chopped carbon fiber bundle, for example, without being limited thereto. It is possible to optimize the above by trial and error depending on the waveform of the corrugation.

When the lower partition 150 is flat and completely perpendicular to the T direction, when passing under the fragmentation-processing apparatus 140, a part that travels directly under the lower partition 150 from beginning to end is produced on the first carrier film 41. As a result, in such parts, the thickness of the carbon fiber mat 30 deposited on the first carrier film 41 may be smaller locally.

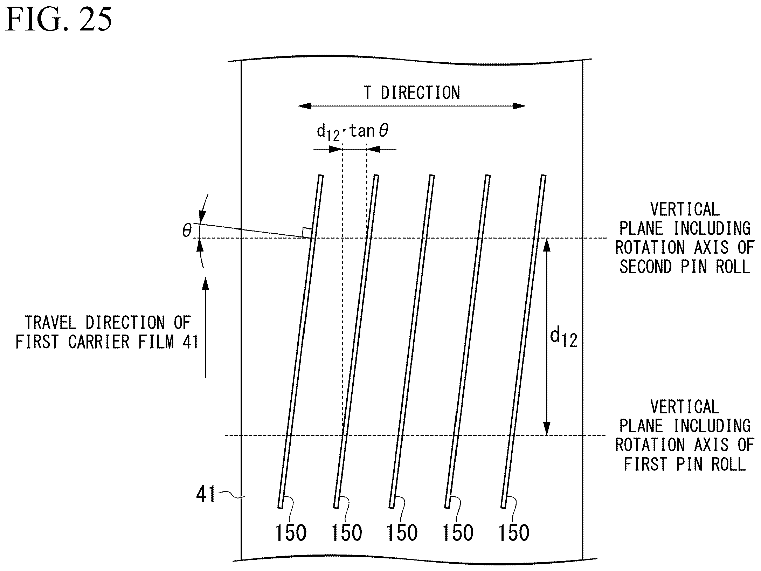

To prevent such a situation, at least at a part of the lower partition 150, preferably, at least at a part sandwiched between a vertical plane including the rotation axis of the first pin roll 141 and a vertical plane including the rotation axis of the second pin roll 142, it is possible to incline the normal line of the lower partition 150 from the T direction in the horizontal plane. FIG. 25 shows an example thereof. The inclination angle θ may be 1° or more, 5° or more, 10° or more, 15° or more, or 20° or more, as well as 45° or less, 40° or less, or 35° or less, without being limited thereto.

In the example shown in FIG. 25, the plurality of lower partitions 150 are parallel to each other, but such a configuration is not required. When inclining the normal line of the plurality of lower partitions 150 from the T direction in the horizontal plane, it is not necessary for the lower partitions 150 to be parallel to each other.

When the lower partition 150 is completely perpendicular to the T direction, the width of the region where the deposited amount of the chopped carbon fiber bundle 20 is reduced due to being in the shadow of the lower partitions 150 is estimated to be approximately the same as the length of the chopped carbon fiber bundle 20. Taking the above into consideration, it is possible to determine the inclination angle θ when the normal line of the lower partition 150 is inclined from the direction T in the horizontal plane such that Expression (1) is satisfied. ${d}_{12} ⋅ tanθ \geq a ⋅ {L}_{F}$ (1)

In Expression (1), d₁₂ is the distance between the rotation axes of the first pin roll 141 and the second pin roll 142, and L_{F} is the fiber length of the chopped carbon fiber bundle 20.

The coefficient a is preferably 1 and more preferably 2.

Accordingly, when the fiber length L_{F} of the chopped carbon fiber bundle 20 is 1.3 cm, di₂·tanθ is preferably 1.3 cm or more and more preferably 2.6 cm or more.

Depending on the angle between the cutting plane of the chopped carbon fiber bundle 20 at both ends and the fiber direction, the length of the chopped carbon fiber bundle 20 may exceed the fiber length thereof and thus it is desirable to also consider this point when setting θ.

Instead of inclining the normal line of the lower partition 150 from the direction T in the horizontal plane, at least a part of the lower partition 150, preferably, at least the part sandwiched between the vertical plane including the rotation axis of the first pin roll 141 and the vertical plane including the rotation axis of the second pin roll 142, is corrugated such that the horizontal cross-section has a wave shape to obtain the same effect. The waveform may be a rectangular wave, preferably a trapezoidal wave, more preferably a sine wave, and most preferably a triangular wave.

It is desirable for the period of the corrugation to be sufficiently large compared to the length of the chopped carbon fiber bundle 20 and thus twice or more the fiber length L_{F} of the chopped carbon fiber bundle 20 is preferable.

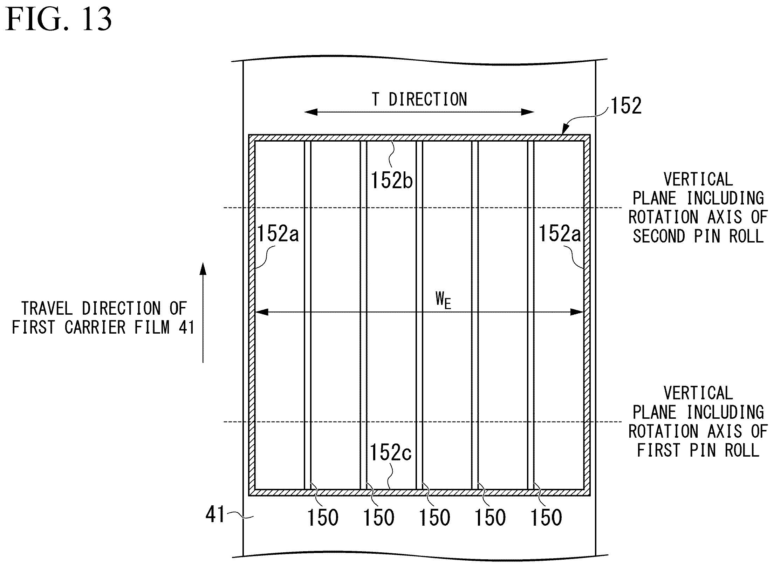

In one example, as shown in FIG. 13, all of the lower partitions 150 may be arranged inside an enclosure 152.

The enclosure 152 is comprises two side walls 152a parallel to the travel direction of the first carrier film 41 and a front wall 152b and a rear wall 152c parallel to the T direction.

The position of the upper end of the enclosure 152 may be higher than the upper ends of the first pin roll 141 and the second pin roll 142 provided in the fragmentation-processing apparatus 140. That is, the enclosure 152 may surround the lower partition 150 at the lower part thereof and surround the first pin roll 141 and the second pin roll 142 at the upper part thereof.

When the fragmentation-processing apparatus 140 has the covers 143, as in the example shown in FIG. 5, the upper part of the enclosure 152 may surround the first pin roll 141 and the second pin roll 142 along with the covers 143, or the upper part of the enclosure 152 may be integrated with the covers 143 to surround the first pin roll 141 and the second pin roll 142.

The inner dimension in the T direction at the lower end of the enclosure 152, that is, a distance w_{E} between the lower edges of the two side walls 152a, is usually less than the width of the first carrier film 41. When the lower edges of the two side walls 152a of the enclosure 152 are brought sufficiently close to the first carrier film 41, the width of the carbon fiber mat 30 deposited on the first carrier film 41 is approximately the same as the distance w_{E} between the lower edges of the two side walls 152a.

The distance from the lower edges of the two side walls 152a of the enclosure 152 to the upper surface of the first carrier film 41 is preferably equal to or less than the distance from the lower edge 150b of the lower partition to the upper surface of the first carrier film 41.

The lower partition 150 may be connected to each of the front wall 152b and the rear wall 152c of the enclosure without gaps.

In order to prevent the chopped carbon fiber bundles from orienting along the enclosure 152, at least a part of the enclosure 152 may be corrugated such that the horizontal cross-section has a wave shape.

It is possible to set the pitch and height of the corrugation to be the same as the fiber length of the chopped carbon fiber bundle, for example, without being limited thereto.

As a modification example, the other parts of the enclosure 152 may be removed, leaving only all or a part of each of the side walls 152a, such that the function of regulating the width of the carbon fiber mat 30 formed on the first carrier film 41 in the T direction is not lost. This modification has the advantage of facilitating the detection and repair of defects occurring in the lower partition 150, as well as facilitating the removal of cotton fiber debris attached to the lower partition.

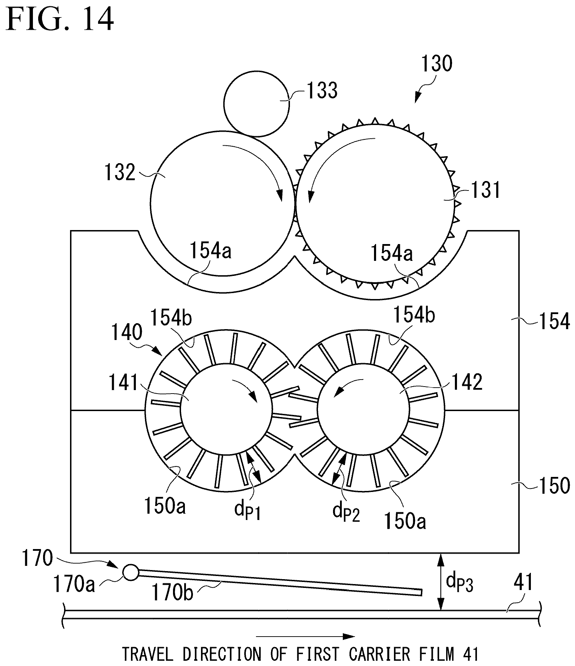

In a suitable example, as shown in FIG. 14, an upper partition 154 perpendicular to the T direction may be arranged above the fragmentation-processing apparatus 140, that is, in the space between the chopper 130 and the fragmentation-processing apparatus 140.

In the example of FIG. 14, the upper edge 150a of the lower partition 150 and a lower edge 154b of the upper partition 154 each have a horizontal section at both ends and the former and the latter butt up against each other at the horizontal section. Such a configuration is preferable, but not required. In other examples, the positions of the lower partition 150 and the upper partition 154 may be shifted from each other in the T direction.

The objective of the upper partition 154 is to prevent the chopped carbon fiber bundle 20 from moving in the T direction due to the airflow produced by the rotation of the first pin roll 141 and the second pin roll 142 when falling from the chopper 130 toward the fragmentation-processing apparatus 140, thereby further improving the uniformity of the areal weight in the T direction of the carbon fiber mat deposited on the first carrier film 41 compared to a case of using only the lower partition 150.

The following is a description of a preferred embodiment when arranging the upper partition 154.

First, similarly to the lower partition 150, the upper partition 154 preferably extends along the travel direction of the first carrier film 41 so as to intersect both the vertical plane including the rotation axis of the first pin roll 141 and the vertical plane including the rotation axis of the second pin roll 142.

Second, at any location on the lower edge 154b of the upper partition 154, the distance d_{P1} from the circumferential surface of the cylinder 141a of the first pin roll is preferably greater than the length L_{P1} of the pins 141b of the first pin roll and the distance d_{P2} from the circumferential surface of the cylinder 142a of the second pin roll is preferably greater than the length L_{P2} of the pins 142b of the second pin roll.

The difference between the distance d_{P1} and the length L_{P1} of the pins 141b of the first pin roll and the difference between the distance d_{P2} and the length L_{P2} of the pins 142b of the second pin roll are preferably both 0.1 cm or more and more preferably 0.5 cm or more.

When the pin roll is rotated, the pin tips of the pin roll and the lower edge of the upper partition are preferably separated by 0.1 cm or more and more preferably by 0.5 cm or more so as to avoid the generation of fuzz caused by the strong shear force upon the chopped carbon fiber bundle sandwiched between the pin roll and the upper partition and to avoid the chopped carbon fiber bundles becoming jammed between the pin rolls and the upper partition.

Furthermore, at least between the vertical plane including the rotation axis of the first pin roll 141 and the vertical plane including the rotation axis of the second pin roll 142, at least one of the following third condition and fourth condition may be satisfied at any location on the lower edge 154b of the upper partition 154.

Third condition: the distance d_{P1} from the circumferential surface of the cylinder 141a of the first pin roll is less than the length L_{P1} of the pins 141b of the first pin roll plus 3 cm, preferably less than L_{P1} plus 2 cm, more preferably less than L_{P1} plus 1.2 cm.

Fourth condition: The distance d_{P2} from the circumferential surface of cylinder 142a of the second pin roll is less than the length L_{P2} of the pins 141b of the second pin roll plus 3 cm, preferably less than L_{P2} plus 2 cm, more preferably less than L_{P2} plus 1.2 cm.

As another example, when the distance d₁₂ between the rotation axes of the first pin roll 141 and second pin roll 142 is variable, all or a part of the lower edge 154b of the upper partition 154 may be made horizontal such that either or both of the first pin roll 141 and second pin roll 142 may be moved horizontally along the travel direction of the first carrier film 41. In the example shown in FIG. 23, the lower edge 154b of the upper partition 154 is entirely horizontal.

Third, at least between the vertical plane including the rotation axis of the first pin roll 141 and the vertical plane including the rotation axis of the second pin roll 142, at any location on the upper edge 154a of the upper partition 154, at least one of the following fifth condition and sixth condition may be satisfied.

Fifth condition: the distance from the circumferential surface of the cutter roll 131 does not exceed 3 cm and preferably does not exceed 2 cm and more preferably does not exceed 1 cm.

Sixth condition: the distance from the circumferential surface of the receiving roll 132 does not exceed 3 cm and preferably does not exceed 2 cm and more preferably does not exceed 1 cm.

When arranging the upper partition 154, the position of the upper end of the enclosure 152 may be higher than the upper ends of the first pin roll 141 and the second pin roll 142, and the upper partition 154 may be arranged inside the enclosure 152.

In a modification example, the lower partition 150 and the upper partition 154 may be connected to each other to form an integral-type partition.

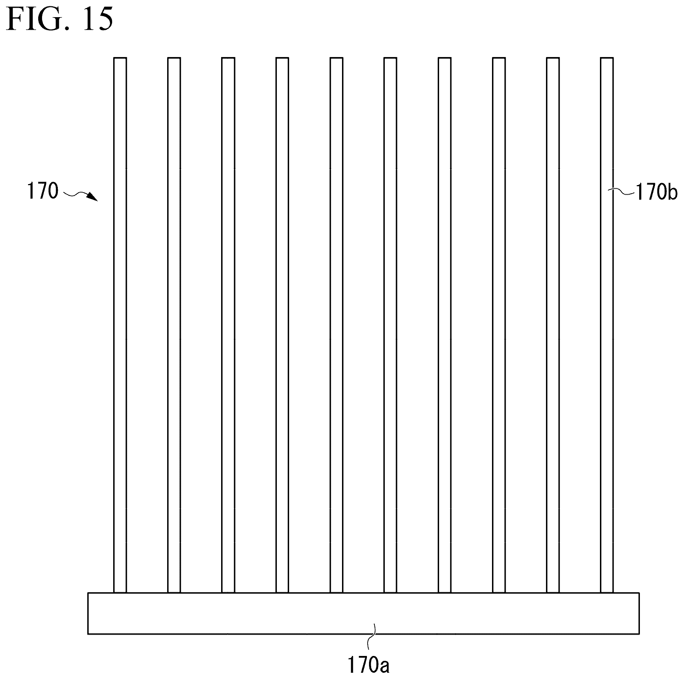

In the example of FIG. 14, a comb 170 is arranged between the lower partition 150 and the first carrier film 41. As shown in FIG. 15, the comb 170 has a structure in which a plurality of second rods 170b are fixed to the sides of a first rod 170a like the teeth of a comb.

As shown in FIG. 14, the comb 170 is arranged such that the first rod 170a is parallel to the T direction and the second rods 170b are perpendicular to the T direction and preferably inclined such that the free ends of the second rods 170b are closer to the first carrier film 41 than the fixed ends. In the example of FIG. 14, the fixed ends of the second rods 170b are positioned further to the upstream side of the first carrier film 41 in the travel direction than the free ends, or may be positioned opposite thereto.

Using the comb 170 makes it possible to suppress the orientation of the chopped carbon fiber bundles deposited on the first carrier film 41 from being biased in the travel direction of the first carrier film 41. However, the use of the comb 170 is optional and not required.

Below the fragmentation-processing apparatus 140, the travel direction of the first carrier film 41 is preferably horizontal. In other words, the upper surface of the first carrier film 41 is preferably maintained to be horizontal below the fragmentation-processing apparatus 140.

Referring again to FIG. 3, the SMC manufacturing apparatus 100 has a mechanism for gradually bringing the first carrier film 41 and the second carrier film 42 closer together on the upstream side of the impregnating machine 160.

By this mechanism, the first carrier film 41 and the second carrier film 42 are laminated together to form a laminate 60. In the laminate 60, the first resin paste layer 51L, the carbon fiber mat 30, and the second resin paste layer 52L are sandwiched between the first carrier film 41 and the second carrier film 42. In order to transport this laminate 60 while sandwiched between two transport belts from above and below, the impregnating machine 160 is provided with two (upper and lower) belt transport devices, as well as rolls for pressing the laminate 60 sandwiched between each of the transport belts.

### 1.3. Manufacturing Method

A description will be given below of the method of manufacturing an SMC of the present embodiment using the SMC manufacturing apparatus described in 1.2. above as an example.

First, the continuous carbon fiber bundle 10 is drawn out from a fiber package prepared in advance. The continuous carbon fiber bundle may be drawn out by external unwinding from a bobbin package attached to a creel, or the continuous carbon fiber bundle may be drawn out by internal unwinding from a package from which the bobbin has been removed.

A plurality of the continuous carbon fiber bundles 10 are arranged to be parallel to each other and supplied to the chopper 130 from a direction perpendicular to the T direction. At this time, the continuous carbon fiber bundles 10 are arranged such that the number of those to be cut per axial direction length of the cutter roll 131 is constant.

Arranging the continuous carbon fiber bundles 10 at a constant pitch is preferable, but not required. For example, when a plurality of the lower partitions 150 are lined up at a constant pitch P in the T direction, the continuous carbon fiber bundles 10 may be arranged such that the number of those to be cut per unit length of the cutter roll 131 is constant when the pitch P is the unit length.

In the chopper 130, the continuous carbon fiber bundle 10 is cut such that the fiber length after cutting is a predetermined length in the range of 10 mm to 60 mm to obtain the chopped carbon fiber bundles 20. The predetermined length may typically be 0.5 inches (approximately 1.3 cm), 1 inch (approximately 2.5 cm), 2 inches (approximately 5.1 cm), or the like, without being limited thereto.

The objective of the fragmentation-processing by the fragmentation-processing apparatus 140 is not to unwind the chopped carbon fiber bundle 20 until it is a single filament or a state close thereto. Preferably, the circumferential speeds at the pin tips of the first pin roll 141 and second pin roll 142 are set such that the fragmentation-processing does not generate fiber bundles having a filament number of 0.5 K or less and single filaments, or such that even if they are generated, their amount contained in the carbon fiber mat 30 deposited on the first carrier film 41 is less than 1% by weight.

For example, when a continuous carbon fiber bundle having a filament number per bundle of NK and being partially split into n sub-bundles in advance is cut using a chopper, the chopped carbon fiber bundles produced thereby may include a fiber bundle having a filament number greater than {(N/n) + 0.5}K for some reason. The objective of the fragmentation-processing may be to split such a chopped carbon fiber bundle into a plurality of chopped carbon fiber bundles having a filament number per bundle of less than {(N/n) + 0.5}K.

In another example, the objective of the fragmentation-processing may be to split a chopped carbon fiber bundle obtained by cutting a continuous carbon fiber bundle without being partially split into chopped carbon fiber bundles having a lower filament number.

In the fragmentation-processing apparatus 140, the first pin roll 141 and the second pin roll 142 are driven to rotate such that the pins move downward from above on the side facing the other side, respectively. One of the reasons that the fragmentation-processing apparatus 140 has two pin rolls and that the two pin rolls are rotated in this manner is so that it is possible to strike more of the chopped carbon fiber bundle 20 with the pins of the pin rolls and, in addition, even when the weight of the chopped carbon fiber bundles is distributed, it is difficult for the carbon fiber mat 30 to have a front and back.

The reason why it is difficult for the carbon fiber mat 30 to have a front and back is that both heavy chopped carbon fiber bundles and light chopped carbon fiber bundles are collected in a narrow region between the two pin rolls and fall on the first carrier film 41 at the same time.

Another reason for rotating each of the first pin roll 141 and the second pin roll 142 such that the pins move downward from above on the side facing the other pin roll is not to apply a strong shear force to the chopped carbon fiber bundle 20 passing between these two pin rolls. This is because a strong shear force may cause fuzz in the carbon fiber bundles.

To achieve this objective more effectively, the circumferential speed at the pin tips is preferably equal between the first pin roll 141 and the second pin roll 142.

Before depositing the carbon fiber mat 30, the first resin paste 51 is applied to the first carrier film 41 drawn out from the rolls, using the first applicator 110.

The first resin paste 51 is a thermosetting resin composition and the base resin thereof is, for example, a vinyl ester resin (also called epoxy acrylate resin), an unsaturated polyester resin, an epoxy resin, a polyimide resin, a maleimide resin, or a phenol resin, without being limited thereto. A mixed resin of a vinyl ester resin and an unsaturated polyester resin may be used as the base resin. The first resin paste 51 comprises curing agents, polymerization inhibitors, thickeners, reactive diluents, low shrinkage agents, and the like, blended therein as necessary.

The chopped carbon fiber bundles 20 processed with the fragmentation-processing apparatus 140 falls on the upper surface of the first carrier film 41 on which the first resin paste layer 51L is formed and forms the carbon fiber mat 30.

In a separate step, the second resin paste 52 having the same formulation as the first resin paste 51 is applied to the second carrier film 42 using the second applicator 120.

The second carrier film 42 is overlaid on the first carrier film 41 with the carbon fiber mat 30 placed on the upper surface with the surface on which the second resin paste layer 52L formed being face down and the laminate 60 formed thereby is pressed in the impregnating machine 160, such that the carbon fiber mat 30 is impregnated with the first resin paste 51 and the second resin paste 52.

The impregnated carbon fiber mat 30 is wound on a bobbin while still sandwiched between the first carrier film 41 and the second carrier film 42. Thereafter, the sheet molding compound is completed through a step of thickening the first resin paste 51 and the second resin paste 52 impregnated in the carbon fiber mat 30.

The sheet molding compound is used for molding CFRP products, for example, using the compression molding method. CFRP products able to be manufactured using the sheet molding compound include not only parts used for aircraft, unmanned aerial vehicles, automobiles, ships, and various other transportation equipment, but also encompass sporting goods, leisure goods, and the like.

### 2. Modified Embodiments

In modified embodiments, a modification in which the fragmentation-processing apparatus A is replaced with another type of fragmentation-processing apparatus or a modification in which the operation of the fragmentation-processing apparatus A is changed may be added with respect to the method of manufacturing an SMC and manufacturing apparatus described in 1. above.

In structures common to the method of manufacturing an SMC and manufacturing apparatus according to the modified embodiment and the method of manufacturing an SMC and manufacturing apparatus described in 1. above, the preferable embodiments thereof are also common.

### 2.1. First Modified Embodiment

In the first modified embodiment, the fragmentation-processing apparatus A is replaced with a single pin roll-type fragmentation-processing apparatus provided with only one pin roll having a rotation axis parallel to the T direction. The single pin roll provided in this fragmentation-processing apparatus may have a maximum radius, for example, in a range of 100 mm or more and 200 mm or less and a cylinder diameter in a range of 40 mm or more and 60 mm or less, without being limited thereto.

**In** the first modified embodiment, the "first vertical plane" and the "second vertical plane" are defined as follows: a vertical plane including the rotation axis of the pin roll is positioned intermediately between the first vertical plane and second vertical plane and distances from the vertical plane including the rotation axis of the pin roll to the first vertical plane and to the second vertical plane are both twice the maximum radius of the pin roll.

Among the chopped carbon fiber bundles supplied to the single pin roll-type fragmentation-processing apparatus, some fall directly under the pin roll, some bounce in the same direction as the travel direction of the first carrier film and some bounce in the opposite direction. Accordingly, in the first modified embodiment, the lower partition partitioning the space through which the fragmentation-processed chopped carbon fiber bundles fall preferably has a part sandwiched between the first vertical plane and the second vertical plane.

Whether the lower partition is provided to intersect one or both of the first vertical plane and the second vertical plane and whether the lower partition is continuous between the first vertical plane and the second vertical plane may be determined after observing where the chopped carbon fiber bundles fall most.

In the first modified embodiment, in order to make it difficult for the chopped carbon fiber bundles to orient along the lower partition, it is possible to corrugate at least a part of the lower partition such that the horizontal cross-section has a wave shape. The waveform may be a rectangular wave, a sine wave, a triangular wave, or a trapezoidal wave, without being limited thereto.

Also in the first modified embodiment, it is desirable for a part that travels directly under the lower partition from beginning to end when passing under the fragmentation-processing apparatus to not be produced on the first carrier film. Therefore, at least in a part of the lower partition, the normal line of the lower partition may be inclined from the T direction in the horizontal plane. The inclination angle may be 1° or more, 5° or more, 10° or more, 15° or more, or 20° or more, as well as 45° or less, 40° or less, or 35° or less, without being limited thereto.

In one example, it is possible to determine the inclination angle θ when the normal line of the lower partition is inclined from the T direction in the horizontal plane such that Expression (2) is satisfied. ${D}_{12} ⋅ tanθ \geq a ⋅ {L}_{F}$ (2)

In Expression (2), D₁₂ is the distance between the first vertical plane and the second vertical plane (four times the maximum radius of the pin roll) and L_{F} is the fiber length of the chopped carbon fiber bundle.

The coefficient a is preferably 1 and more preferably 2.

Instead of inclining the normal line of the lower partition from the T direction in the horizontal plane, at least a part of the lower partition may be corrugated such that the horizontal cross-section has a wave shape. The waveform of the corrugation may be a rectangular wave, preferably a trapezoidal wave, more preferably a sine wave, and most preferably a triangular wave. The period of the corrugation is preferably twice or more a fiber length of the chopped carbon fiber bundle.

### 2.2. Second Modified Embodiment

In the second modified embodiment, the fragmentation-processing apparatus A is replaced with a cage roll-type fragmentation-processing apparatus. The cage roll type fragmentation-processing apparatus is provided with a cage roll having a rotation axis parallel to the T direction as a means for striking the chopped carbon fiber bundle.

The cage roll is a roll having the central axis of the central rod as the rotation axis and which is provided with a structure in which a plurality of elongated members span between a pair of disks fixed around a central rod, as the unit structure thereof. Examples of elongated members include rods having various cross-sectional shapes, such as round rods, square rods, or flat rods, and taut wires.

In one example, a cage roll may have a plurality of the unit structures described above around a single central rod, or may have a disk which is common between two unit structures.

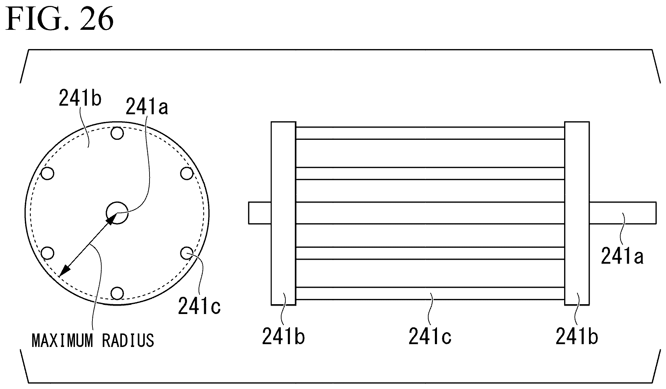

The cage roll 241 illustrated in FIG. 26 comprises a central rod 241a, a pair of disks 241b fixed at the periphery thereof, and six round rods 241c spanning between the pair of disks. In this example, all the round rods are arranged on one cylindrical surface centered around the rotation axis, but in other examples, a plurality of round rods (or other elongated members) may be arranged on each of a plurality of concentric cylindrical surfaces centered around the rotation axis. The number of round rods (or other elongated members) arranged on each cylindrical surface is not limited to six.

The diameter of the elongated members may be, for example, 3 mm or less, 1.5 mm or less, as well as 1 mm or more.

Here, the maximum radius of the cage roll is defined as the radius of the cylinder that is in contact with the elongated member farthest from the rotation axis from the opposite side of the rotation axis, among the cylinders centered around the rotation axis. In the case of the cage roll 241 shown in FIG. 26, the dashed line radius shown in the left diagram in FIG. 26 is the maximum radius.

The maximum radius of the cage roll may be, for example, in a range of 100 mm or more and 200 mm or less, without being limited thereto.

In the second modified embodiment, the "third vertical plane" and the "fourth vertical plane" are defined as follows: a vertical plane including the rotation axis of the cage roll is positioned intermediately between the third vertical plane and the fourth vertical plane and distances from the vertical plane including the rotation axis of the cage roll to the third vertical plane and to the fourth vertical plane are both twice the maximum radius of the cage roll.

Among the chopped carbon fiber bundles supplied to the cage roll type fragmentation-processing apparatus, some drop directly under the cage roll, some are bounced in the same direction as the travel direction of the first carrier film and some are bounced in the opposite direction. Accordingly, in the second modified embodiment, the lower partition arranged in the space through which the fragmentation-processed chopped carbon fiber bundles fall preferably has a part sandwiched between the third vertical plane and the fourth vertical plane.

Whether the lower partition is provided to intersect one or both of the third vertical plane and the fourth vertical plane and whether the lower partition is continuous between the third vertical plane and the fourth vertical plane may be determined after observing where the chopped carbon fiber bundles fall most.

In the second modified embodiment, in order to make it difficult for the chopped carbon fiber bundles to orient along the lower partition, it is possible to corrugate at least a part of the lower partition such that the horizontal cross-section has a wave shape. The waveform may be a rectangular wave, a sine wave, a triangular wave, or a trapezoidal wave, without being limited thereto.

In the second modified embodiment, it is also desirable for a part that travels directly under the lower partition from beginning to end when passing under the fragmentation-processing apparatus to not be produced on the first carrier film. Therefore, at least in a part of the lower partition, the normal line of the lower partition may be inclined from the T direction in the horizontal plane. The inclination angle may be, for example, 1° or more, 5° or more, 10° or more, 15° or more, or 20° or more, as well as 45° or less, 40° or less, or 35° or less, without being limited thereto.

In one example, it is possible to determine the inclination angle θ when the normal line of the lower partition is inclined from the T direction in the horizontal plane such that Expression (3) is satisfied. ${D}_{34} ⋅ tanθ \geq a ⋅ {L}_{F}$ (3)

In Expression (3), D₃₄ is the distance between the third vertical plane and the fourth vertical plane (four times the maximum radius of the cage roll), and L_{F} is the fiber length of the chopped carbon fiber bundle.

The coefficient a is preferably 1 and more preferably 2.

Instead of inclining the normal line of the lower partition from the T direction in the horizontal plane, at least a part of the lower partition may be corrugated such that the horizontal cross-section has a wave shape. The waveform of the corrugation may be a rectangular wave, preferably a trapezoidal wave, more preferably a sine wave, and most preferably a triangular wave. The period of the corrugation is preferably twice or more a fiber length of the chopped carbon fiber bundle.

### 2.3. Others

The fragmentation-processing apparatuses of a different type from the fragmentation-processing apparatus A used in the modified embodiments are not limited to those described in 2.1. and 2.2. above. In one of the modified embodiments, the direction of rotation of the pin rolls in the fragmentation-processing apparatus A described above may be changed and at least one of the first pin roll 141 and the second pin roll 142 may be driven to rotate such that the pins move from bottom to top on the side facing the other pin roll.

### 3. Experiment Results

The results of experiments conducted by the present inventors and others are given below.

### 3.1. Experiment 1

A flat continuous carbon fiber bundle (TR50S15L manufactured by Mitsubishi Chemical Corporation) having a filament number of 15K, a width of 8 mm, and a thickness of 0.1 mm was partially split into five sub-bundles each having a width of approximately 1.6 mm by forming four slit rows having a slit length of 1,000 mm and an inter-slit gap length of 5 mm. The position of the inter-slit gaps in the fiber direction was the same for all slit rows.

A carbon fiber mat was produced from the partially split continuous carbon fiber bundles described above using an SMC manufacturing apparatus having a basic configuration in common with the SMC manufacturing apparatus shown in FIG. 3, except for not comprising a fragmentation-processing apparatus and a lower partition.

More precisely, the continuous carbon fiber bundle was cut into approximately 1 inch (25.4 mm) lengths by a chopper and the produced chopped carbon fiber bundles were allowed to fall onto a carrier film without being coated with a resin paste and traveling in the horizontal direction at a line speed of 5 m/min, to form the carbon fiber mat.

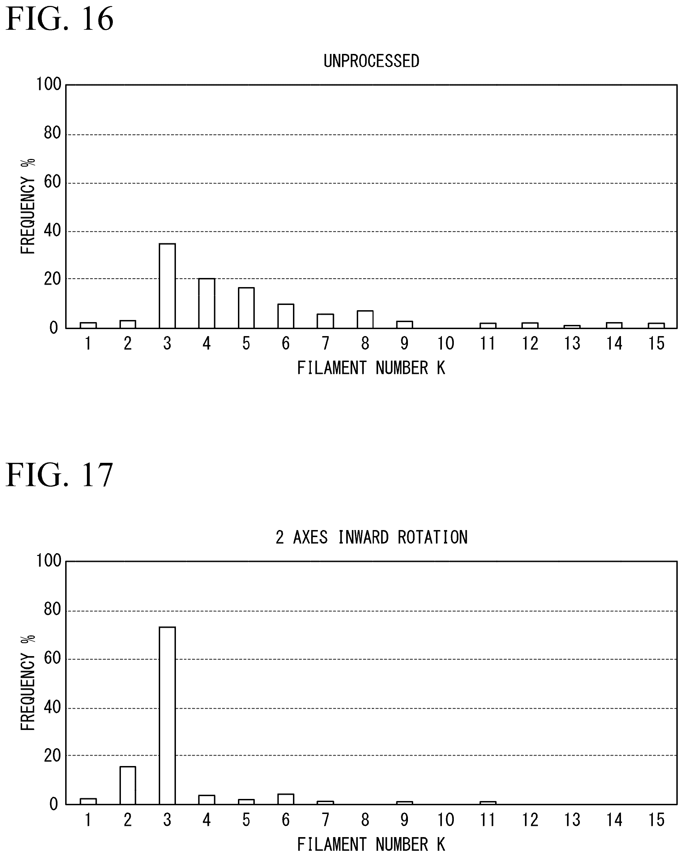

From the carbon fiber mat, a region of approximately 21 x 30 cm² deposited in the vicinity of the center line of the carrier film was selected and the weight of all the chopped carbon fiber bundles (300 or more pieces) included in the region was measured. The filament number distribution of the chopped carbon fiber bundles in the carbon fiber mat, as determined by converting the measured weight into a filament number, is shown in FIG. 16.

In the produced carbon fiber mat, the amount of carbon fiber bundles whose filament number exceeded 0.5 K was 99.9% by weight or more.

### 3.2. Experiment 2

A carbon fiber mat was produced using the same SMC manufacturing apparatus used in Experiment 1 except for comprising a fragmentation-processing apparatus. The filament number distribution of the chopped carbon fiber bundles in the carbon fiber mat was measured. The procedure for producing the carbon fiber mat was the same as in Experiment 1, except that the chopped carbon fiber bundles were fragmentation-processed with the fragmentation-processing apparatus before being deposited on a carrier film.

The fragmentation-processing apparatus comprised two pin rolls arranged side by side in the horizontal direction, each provided with a rotation axis parallel to the T direction. The two pin rolls were both made of metal and had the same configuration. The diameter and length of the pins arranged on the circumferential surfaces of the cylinders of the pin rolls were 3 mm and 20 mm, respectively. The arrangement of the pins on the circumferential surface of the cylinders of the pin rolls was periodic and overlapped with the original arrangement when shifted 7.5 mm in the axial direction and 6.5 mm in the circumferential direction in a plane development of the circumferential surface. The sum of the maximum radii of each pin roll was 10 mm greater than the distance between the rotation axes of the two pin rolls.

The carbon fiber mat was produced while rotating the two pin rolls both at a circumferential speed of 377 m/min at the pin tips such that in each of the two pin rolls, the pins moved downward from above on the side facing the other pin roll. The filament number distribution of the chopped carbon fiber bundles in the produced carbon fiber mat is shown in FIG. 17.

In the produced carbon fiber mat, the amount of carbon fiber bundles whose filament number exceeded 0.5 K was 99.9% by weight or more.

### 3.3. Experiment 3

A carbon fiber mat was produced in the same manner as in Experiment 2, except that the two pin rolls were each rotated such that the pins moved upward from below on the side facing the other pin roll. The filament number distribution in the carbon fiber mat was measured.

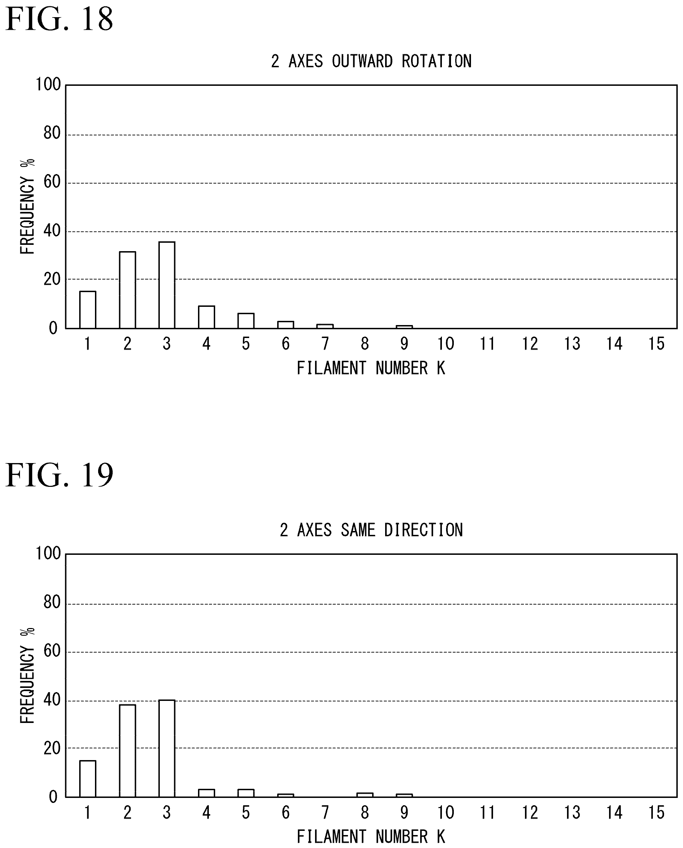

The filament number distribution of the chopped carbon fiber bundles in the produced carbon fiber mat is shown in FIG. 18.

It was found that the chopped carbon fiber bundles tended to be more finely fragmented in the fragmentation-processing of Experiment 3 compared to that of Experiment 2.

### 3.4. Experiment 4

A carbon fiber mat was produced in the same manner as in Experiment 2, except that the two pin rolls were rotated in the same direction. The filament number distribution in the carbon fiber mat was measured.

The filament number distribution of the chopped carbon fiber bundles in the produced carbon fiber mat is shown in FIG. 19.

It was found that the chopped carbon fiber bundles tended to be more finely fragmented in the fragmentation-processing of Experiment 4 compared to that of Experiment 2.

### 3.5. Experiment 5.

The experiment described below was performed using an SMC manufacturing apparatus having the same basic configuration as the SMC manufacturing apparatus shown in FIG. 3, except that a lower partition was not provided and two side covers were arranged to regulate the T direction width of the carbon fiber mat deposited on the carrier film.

A flat continuous carbon fiber bundle (TR50S15L manufactured by Mitsubishi Chemical Corporation) having a filament number of 15K, a width of 8 mm, and a thickness of 0.1 mm was partially split into 9 sub-bundles each having a width of approximately 0.9 mm by forming 8 slit rows having a slit length of 700 mm and an inter-slit gap length of 5 mm. The position of the inter-slit gaps in the fiber direction was the same for all slit rows.

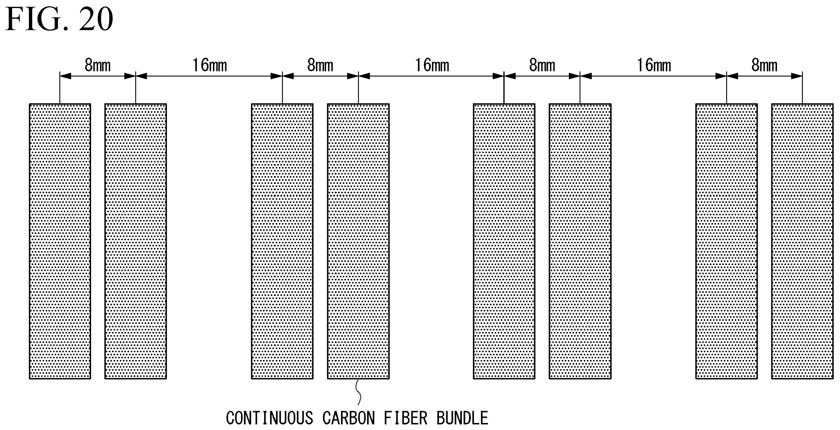

Fifty-two of the partially split continuous carbon fiber bundles were arranged to be parallel to each other and supplied to the chopper of the SMC manufacturing apparatus from a direction intersecting the T direction. The pitches between the continuous carbon fiber bundles when arranged in parallel for supplying to the chopper were alternately 8 mm and 16 mm, as shown in FIG. 20.

The continuous carbon fiber bundles were cut into approximately 1 inch (25.4 mm) lengths by the chopper. The produced chopped carbon fiber bundles were fragmentation-processed with a fragmentation-processing apparatus and then allowed to fall on a carrier film without being coated with a resin paste and traveling in the horizontal direction at a line speed of 5 m/min.

The fragmentation-processing apparatus was the same as that used in Experiments 2 to 4.

The two pin rolls were rotated both at a circumferential speed of 314 m/min at the pin tip such that in each of the two pin rolls, the pins moved downward from above on the side facing the other pin roll.

The two side covers arranged under the fragmentation-processing apparatus comprised aluminum alloy plates and were parallel to the travel direction of the carrier film. The two side covers had each a length in the travel direction of the carrier film of 200 mm. Both side covers were arranged to intersect both the vertical plane including the rotation axis of one pin roll of the fragmentation-processing apparatus and the vertical plane including the rotation axis of the other pin roll of the fragmentation-processing apparatus.

The lower edge of each side cover was horizontal and distant from the upper surface of the traveling carrier film by 58 mm. The lower part of each side cover was gently folded inward such that the interval in the T direction between the lower edges of the two side covers was 600 mm.

As a result of using the side covers, the T direction width of the carbon fiber mat deposited on the carrier film was approximately 600 mm.

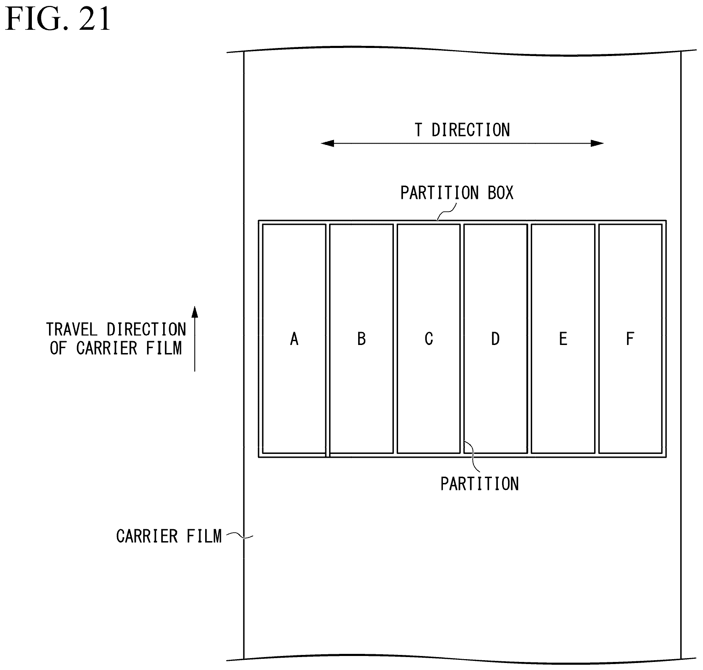

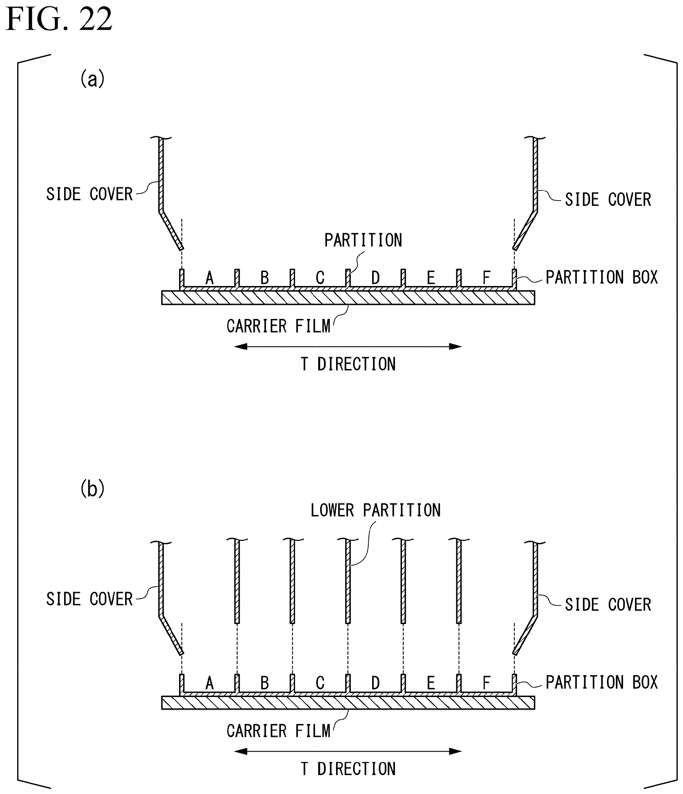

In order to examine the distribution of areal weight of the carbon fiber mat in the T direction, a 600 mm (longitudinal direction) x 300 mm (transverse direction) x 45 mm (height) partition box was prepared in which six compartments A to F, each having a 100 mm x 300 mm opening at the upper part were lined up in a row. The partition box was placed on the carrier film and passed under the fragmentation-processing apparatus such that the longitudinal direction was parallel to the T direction, as shown in FIG. 21, and such that both ends in the longitudinal direction each passed directly under the lower edge of the side cover, as shown in FIG. 22(a).

The weights of the chopped carbon fiber bundles fallen into each of the six compartments A to F of the partition box were measured and the mean, standard deviation, and coefficient of variation between the compartments were calculated.

### 3.6. Experiment 6

Five upper partitions having the same shape and size as each other and five lower partitions having the same shape and size as each other were produced with flat aluminum alloy plates having a thickness of 3 mm.

The five lower partitions were installed between two side covers placed under the fragmentation-processing apparatus at a pitch of 100 mm along the T direction, such that each was perpendicular to the T direction and one in the center was positioned exactly intermediately between the two side covers.

Five upper partitions were installed between the chopper and the fragmentation-processing apparatus such that each was perpendicular to the T direction and each was paired with one of the lower partitions.

Horizontal sections were provided at both ends of the upper edge of the lower partition and at both ends of the lower edge of the upper partition, such that between the paired lower partition and upper partition, the upper edge of the former and the lower edge of the latter butt up against each other at the horizontal sections.

Both the lower partition and the upper partition were provided with straight rear edges and front edges parallel to each other. The lower partition and upper partition were installed, such that the rear edge and front edge were vertical.

The lengths of the lower partition and the upper partition from the rear edge to the front edge, that is, the lengths in the travel direction of the carrier film, were both 370 mm. Both the lower partition and the upper partition were arranged to intersect both the vertical plane including the rotation axis of one pin roll of the fragmentation-processing apparatus and the vertical plane including the rotation axis of the other pin roll of the fragmentation-processing apparatus.

In a part where the upper edge of the upper partition faced the circumferential surface of the receiving roll of the chopper, the upper edge of the upper partition was made parallel to the circumferential surface of the receiving roll at a distance of 10 mm and, in a part where the upper edge of the upper partition faced the circumferential surface of the cutter roll of the chopper, the upper edge of the upper partition was made parallel to the circumferential surface of the cutter roll at a distance of 10 mm.

In a part where the lower edge of the upper partition faced the circumferential surface of one pin roll of the fragmentation-processing apparatus, the lower edge of the upper partition was made parallel to the circumferential surface of the one pin roll at a distance of 30 mm and, in the part where the lower edge of the upper partition faced the circumferential surface of the other pin roll of the fragmentation-processing apparatus, the lower edge of the upper partition was made parallel to the circumferential surface of the other pin roll at a distance of 30 mm.

In a part where the upper edge of the lower partition faced the circumferential surface of one pin roll of the fragmentation-processing apparatus, the upper edge of the lower partition was made parallel to the circumferential surface the one pin roll at a distance of 30 mm and, in a part where the upper edge of the lower partition faced the circumferential surface of the other pin roll of the fragmentation-processing apparatus, the upper edge of the lower partition was made parallel to the circumferential surface of the other pin roll at a distance of 30 mm.

The lower edge of the lower partition was horizontal and distant from the upper surface of the carrier film by 177 mm.

In the same manner as in Experiment 5, except that the five lower partitions and the five upper partitions was installed in the SMC manufacturing apparatus as described above, fifty-two of the partially split continuous carbon fiber bundles were supplied to the chopper to cut, and the produced chopped carbon fiber bundles were processed with a fragmentation-processing apparatus and then allowed to fall onto a traveling carrier film.

The partition box used in Experiment 5 was placed on the carrier film and passed under the fragmentation-processing apparatus such that each of the five partitions in the partition box passed directly under the lower partition provided in the SMC manufacturing apparatus, as shown in FIG. 22(b).

The weights of the chopped carbon fiber bundles fallen into each of the six compartments A to F of the partition box were measured and the mean, standard deviation, and coefficient of variation between the compartments were calculated.

### 3.7. Experiment 7

In the same manner as in Experiment 6, except that only the lower partitions were installed in the SMC manufacturing apparatus without installing the upper partition, fifty-two of the partially split continuous carbon fiber bundles were supplied to the chopper to cut, and the produced chopped carbon fiber bundles were processed with a fragmentation-processing apparatus and then allowed to fall onto a traveling carrier film.

In the same manner as in Experiment 6, a partition box was placed on the carrier film and passed under the fragmentation-processing apparatus, the weights of the chopped carbon fiber bundles fallen into each of the six compartments A to F of the partition box were measured, and the mean, standard deviation, and coefficient of variation between compartments were calculated.

### 3.8. Experiment 8

In the same manner as in Experiment 6, except that only the upper partitions were installed in the SMC manufacturing apparatus without installing the lower partition, fifty-two of the partially split continuous carbon fiber bundles were supplied to the chopper to cut, and the produced chopped carbon fiber bundles were processed with a fragmentation-processing apparatus and then allowed to fall onto a traveling carrier film.

In the same manner as in Experiment 6, a partition box was placed on the carrier film and passed under the fragmentation-processing apparatus, the weights of the chopped carbon fiber bundles fallen into each of the six compartments A to F of the partition box were measured, and the mean, standard deviation, and coefficient of variation between compartments were calculated.

The results of Experiments 5 to 8 above are summarized in Table 1 below.

**Table 1**

| | Weight of chopped carbon fiber bundle fallen in each compartment [g] | | | | | | Mean [g] | Standard deviation [g] | Coefficient of variation [%] |
|---|---|---|---|---|---|---|---|---|---|
| | A | B | C | D | E | F | | | |
| Experiment 5 | 29.0 | 42.9 | 35.8 | 35.2 | 44.4 | 31.2 | 36.4 | 5.6 | 15 |
| Experiment 6 | 34.6 | 38.1 | 35.2 | 36.7 | 37.2 | 36.0 | 36.3 | 1.2 | 3 |
| Experiment 7 | 37.4 | 37.9 | 32.1 | 33.0 | 37.8 | 38.8 | 36.2 | 2.6 | 7 |
| Experiment 8 | 28.2 | 44.5 | 34.4 | 36.6 | 43.9 | 31.8 | 36.6 | 6.0 | 16 |

Although the present invention was described above in accordance with specific embodiments, each embodiment is presented as an example and does not limit the scope of the present invention. It is possible for each embodiment described in the present specification to be variously modified within the scope of the appended claims. The invention is as set out in the appended claims.

### [Reference Signs List]

10: Continuous carbon fiber bundle
11: Sub-bundle
20: Chopped carbon fiber bundle
30: Carbon fiber mat
41: First carrier film
42: Second carrier film
51: First resin paste
51L: First resin paste layer
52: Second resin paste
52L: Second resin paste layer
60: Laminate
100: SMC manufacturing apparatus
110: First applicator
120: Second applicator
130: Chopper
131: Cutter roll
132: Receiving roll (rubber roll)
133: Guide roll
140: Fragmentation-processing apparatus
141: First pin roll
142: Second pin roll
150: Lower partition
152: Enclosure
154: Upper partition
160: Impregnating machine
170: Comb

## Claims

1. A method of manufacturing a sheet molding compound comprising:
(i) drawing out a carrier film (41) from a roll and causing the carrier film (41) to travel such that a width direction of the carrier film (41) is maintained to be horizontal;
(ii) when a direction being horizontal and being perpendicular to a travel direction of the carrier film (41) is denoted as a T direction, supplying a plurality of continuous carbon fiber bundles (10) arranged in parallel to each other to a chopper (130) comprising a cutter roll (131) having a rotation axis parallel to the T direction, and cutting each of the continuous carbon fiber bundles (10) using the chopper (130);
(iii) depositing a carbon fiber mat (30) by allowing chopped carbon fiber bundles (20) produced by the cutting to fall onto the carrier film (41), after fragmentation-processing them using a fragmentation-processing apparatus (140) which is arranged below the chopper (130);
(iv) impregnating the carbon fiber mat (30) with a thermosetting resin composition; and
(v) arranging a partition (150) partitioning a space along the T direction, the space being that through which the fragmentation-processed chopped carbon fiber bundles (20) fall,
wherein, in at least a part of the partition (150), a normal line is inclined from the T direction in a horizontal plane, and
**characterised in that** the partition (150) is a flat plate and, in at least a part of the partition (150), a thickness direction thereof is inclined from the T direction, a normal line of the partition (150) being inclined from the T direction in a horizontal plane.

2. The method of manufacturing according to Claim 1,
wherein an angle (θ) of the inclination is 1° or more and 45° or less.

3. The method of manufacturing according to Claim 1 or 2,
wherein the fragmentation-processing apparatus (140) comprises a pin roll (141, 142) or a cage roll (241), and
the pin roll (141, 142) or the cage roll (241) has a rotation axis parallel to the T direction.

4. The method of manufacturing according to Claim 1 or 2,
wherein the fragmentation-processing apparatus (140) has a first pin roll (141) and a second pin roll (142), which are arranged side by side in a direction perpendicular to the T direction and have each a rotation axis parallel to the T direction, and
the partition (150) has a part sandwiched between a vertical plane including the rotation axis of the first pin roll (141) and a vertical plane including the rotation axis of the second pin roll (142).

5. The method of manufacturing according to any of Claims 1 to 4,
wherein a plurality of the partitions (150) are lined up along the T direction.

6. The method of manufacturing according to any one of Claims 1 to 5,
wherein all of the partitions (150) are arranged inside an enclosure (152).

7. The method of manufacturing according to Claim 6,
wherein at least a part of the enclosure (152) is corrugated such that a horizontal cross-section has a wave shape.

8. The method of manufacturing according to any one of Claims 1 to 7,
wherein, before depositing the carbon fiber mat (30) on the carrier film (41), a resin paste (51) comprising a thermosetting resin composition is applied to an upper surface of the carrier film (41), and after depositing the carbon fiber mat (30), another carrier film (42) in which another resin paste (52) comprising a thermosetting resin composition is applied to one surface is overlapped on an upper surface side of the carrier film (41) to form a laminate (60), and, further,
the laminate (60) is subjected to pressing.

9. A carbon fiber mat deposition apparatus comprising:
a carrier film travel path;
a chopper (130) arranged above the travel path;
a fragmentation-processing apparatus (140) arranged between the chopper (130) and the travel path; and
a partition (150) by which a space between the fragmentation-processing apparatus and the travel path is partitioned along a T direction,
wherein, when a direction being horizontal and being perpendicular to the travel path is the T direction, the chopper (130) comprises a cutter roll (131) having a rotation axis parallel to the T direction, and, in at least a part of the partition (150), a normal line is inclined from the T direction in a horizontal plane, and
**characterised in that** the partition (150) is a flat plate and, in at least a part of the partition (150), a thickness direction thereof is inclined from the T direction, a normal line of the partition (150) being inclined from the T direction in a horizontal plane.

10. The carbon fiber mat deposition apparatus according to Claim 9,
wherein an angle (θ) of the inclination is 1° or more and 45° or less.

11. The carbon fiber mat deposition apparatus according to Claim 9 or 10,
wherein the fragmentation-processing apparatus (140) comprises a pin roll (241, 242) or a cage roll (241), and
the pin roll (241, 242) or the cage roll (241) has a rotation axis parallel to the T direction.

12. The carbon fiber mat deposition apparatus according Claim 9 or 10,
wherein the fragmentation-processing apparatus (140) has a first pin roll (141) and a second pin roll (142), which are arranged side by side in a direction perpendicular to the T direction and have each a rotation axis parallel to the T direction, and
the partition (150) has a part sandwiched between a vertical plane including the rotation axis of the first pin roll (141) and a vertical plane including the rotation axis of the second pin roll (142).

13. The carbon fiber mat deposition apparatus according to any one of Claims 9 to 12, wherein a plurality of the partitions (150) are lined up along the T direction.

14. The carbon fiber mat deposition apparatus according to any one of Claims 9 to 13, wherein all of the partitions (150) are arranged inside an enclosure (152).

15. The carbon fiber mat deposition apparatus according to Claim 14,
wherein at least a part of the enclosure (152) is corrugated such that a horizontal cross-section has a wave shape.

16. A sheet molding compound manufacturing apparatus (100) comprising:
the carbon fiber mat deposition apparatus according to any one of Claims 9 to 15.

17. The sheet molding compound manufacturing apparatus (100) according to Claim 16, further comprising:
two applicators (110, 120);
a mechanism for laminating two carrier films (41, 42); and
an impregnating machine (160).

## Patentansprüche

1. Verfahren zur Herstellung einer Formverbindung, umfassend:
(i) Herausziehen einer Trägerfolie (41) aus einer Rolle und Laufenlassen der Trägerfolie (41) derart, dass eine Breitenrichtung der Trägerfolie (41) horizontal gehalten wird;
(ii) wenn eine Richtung, die horizontal ist und senkrecht zu einer Laufrichtung der Trägerfolie (41) verläuft, als T-Richtung bezeichnet wird, Zuführen einer Vielzahl von kontinuierlichen Kohlenstofffaserbündeln (10), die parallel zueinander angeordnet sind, zu einem Chopper (130), der eine Schneidwalze (131) umfasst, die eine zur T-Richtung parallele Drehachse aufweist, und Schneiden jedes der kontinuierlichen Kohlenstofffaserbündel (10) unter Verwendung des Choppers (130);
(iii) Ablegen einer Kohlenstofffasermatte (30), indem ermöglicht wird, dass geschnittene Kohlenstofffaserbündel (20), die durch das Schneiden erzeugt werden, auf die Trägerfolie (41) fallen, nachdem diese unter Verwendung einer Fragmentierungsbearbeitungsvorrichtung (140), die unter dem Chopper (130) angeordnet ist, fragmentierungsverarbeitet worden sind;
(iv) Imprägnieren der Kohlenstofffasermatte (30) mit einer wärmehärtenden Harzzusammensetzung; und
(v) Anordnen einer Trennplatte (150), die einen Raum entlang der T-Richtung unterteilt, wobei der Raum derjenige ist, durch den die fragmentierungsbearbeiteten geschnittenen Kohlenstofffaserbündel (20) fallen,
wobei in mindestens einem Teil der Trennplatte (150) eine Normale in einer horizontalen Ebene gegenüber der T-Richtung geneigt ist, und
**dadurch gekennzeichnet, dass**
die Trennplatte (150) eine flache Platte ist und in mindestens einem Teil der Trennplatte (150) eine Dickenrichtung derselben gegenüber der T-Richtung geneigt ist, wobei eine Normale der Trennplatte (150) in einer horizontalen Ebene gegenüber der T-Richtung geneigt ist.

2. Verfahren zur Herstellung nach Anspruch 1,
wobei ein Winkel (θ) der Neigung 1° oder mehr und 45° oder weniger beträgt.

3. Verfahren zur Herstellung nach Anspruch 1 oder 2,
wobei die Fragmentierungsbearbeitungsvorrichtung (140) eine Stiftwalze (141, 142) oder eine Käfigwalze (241) umfasst, und
die Stiftwalze (141, 142) oder die Käfigwalze (241) eine zur T-Richtung parallele Drehachse aufweist.

4. Verfahren zur Herstellung nach Anspruch 1 oder 2,
wobei die Fragmentierungsbearbeitungsvorrichtung (140) eine erste Stiftwalze (141) und eine zweite Stiftwalze (142) aufweist, die in einer zur T-Richtung senkrechten Richtung nebeneinander angeordnet sind und jeweils eine zur T-Richtung parallele Drehachse aufweisen, und
die Trennplatte (150) einen zwischen einer vertikalen Ebene, die die Drehachse der ersten Stiftwalze (141) einschließt, und einer vertikalen Ebene, die die Drehachse der zweiten Stiftwalze (142) einschließt, eingeschobenen Teil aufweist.

5. Verfahren zur Herstellung nach einem der Ansprüche 1 bis 4,
wobei eine Vielzahl der Trennplatten (150) entlang der T-Richtung in einer Reihe angeordnet sind.

6. Verfahren zur Herstellung nach einem der Ansprüche 1 bis 5,
wobei alle Trennplatten (150) innerhalb einer Einhausung (152) angeordnet sind.

7. Verfahren zur Herstellung nach Anspruch 6,
wobei mindestens ein Teil der Einhausung (152) derart gewellt ist, dass ein horizontaler Querschnitt eine Wellenform aufweist.

8. Verfahren zur Herstellung nach einem der Ansprüche 1 bis 7,
wobei, bevor die Kohlenstofffasermatte (30) auf der Trägerfolie (41) abgelegt wird, eine Harzpaste (51), die eine wärmehärtende Harzzusammensetzung umfasst, auf eine obere Fläche der Trägerfolie (41) aufgetragen wird, und nachdem die Kohlenstofffasermatte (30) abgelegt worden ist, eine andere Trägerfolie (42), bei der eine andere Harzpaste (52), die eine wärmehärtende Harzzusammensetzung umfasst, auf eine Oberfläche aufgetragen wird, auf einer oberen Flächenseite der Trägerfolie (41) überlappt wird, um ein Laminat (60) zu bilden, und, weiter,
das Laminat (60) einem Pressen unterzogen wird.

9. Vorrichtung zum Ablegen einer Kohlenstofffasermatte, umfassend:
einen Laufpfad der Trägerfolie;
einen über dem Laufpfad angeordneten Chopper (130);
eine zwischen dem Chopper (130) und dem Laufpfad angeordnete Fragmentierungsbearbeitungsvorrichtung (140); und
eine Trennplatte (150), durch die ein Raum zwischen der Fragmentierungsbearbeitungsvorrichtung und dem Laufpfad entlang einer T-Richtung unterteilt ist,
wobei, wenn eine Richtung, die horizontal ist und senkrecht zu dem Laufpfad verläuft, die T-Richtung ist, der Chopper (130) eine Schneidwalze (131) umfasst, die eine zur T-Richtung parallele Drehachse aufweist, und in mindestens einem Teil der Trennplatte (150) eine Normale in einer horizontalen Ebene gegenüber der T-Richtung geneigt ist, und **dadurch gekennzeichnet, dass**
die Trennplatte (150) eine flache Platte ist und in mindestens einem Teil der Trennplatte (150) eine Dickenrichtung derselben gegenüber der T-Richtung geneigt ist, wobei eine Normale der Trennplatte (150) in einer horizontalen Ebene gegenüber der T-Richtung geneigt ist.

10. Vorrichtung zum Ablegen einer Kohlenstofffasermatte nach Anspruch 9,
wobei ein Winkel (θ) der Neigung 1° oder mehr und 45° oder weniger beträgt.

11. Vorrichtung zum Ablegen einer Kohlenstofffasermatte nach Anspruch 9 oder 10,
wobei die Fragmentierungsbearbeitungsvorrichtung (140) eine Stiftwalze (241, 242) oder eine Käfigwalze (241) umfasst, und
die Stiftwalze (241, 242) oder die Käfigwalze (241) eine zur T-Richtung parallele Drehachse aufweist.

12. Vorrichtung zum Ablegen einer Kohlenstofffasermatte nach Anspruch 9 oder 10,
wobei die Fragmentierungsbearbeitungsvorrichtung (140) eine erste Stiftwalze (141) und eine zweite Stiftwalze (142) aufweist, die in einer zur T-Richtung senkrechten Richtung nebeneinander angeordnet sind und jeweils eine zur T-Richtung parallele Drehachse aufweisen, und
die Trennplatte (150) einen zwischen einer vertikalen Ebene, die die Drehachse der ersten Stiftwalze (141) einschließt, und einer vertikalen Ebene, die die Drehachse der zweiten Stiftwalze (142) einschließt, eingeschobenen Teil aufweist.

13. Vorrichtung zum Ablegen einer Kohlenstofffasermatte nach einem der Ansprüche 9 bis 12,
wobei eine Vielzahl der Trennplatten (150) entlang der T-Richtung in einer Reihe angeordnet sind.

14. Vorrichtung zum Ablegen einer Kohlenstofffasermatte nach einem der Ansprüche 9 bis 13,
wobei alle Trennplatten (150) innerhalb einer Einhausung (152) angeordnet sind.

15. Vorrichtung zum Ablegen einer Kohlenstofffasermatte nach Anspruch 14,
wobei mindestens ein Teil der Einhausung (152) derart gewellt ist, dass ein horizontaler Querschnitt eine Wellenform aufweist.

16. Vorrichtung zur Herstellung einer Formverbindung (100), umfassend:
die Vorrichtung zum Ablegen einer Kohlenstofffasermatte nach einem der Ansprüche 9 bis 15.

17. Vorrichtung zur Herstellung einer Formverbindung (100) nach Anspruch 16, weiter umfassend:
zwei Auftragsvorrichtungen (110, 120);
einen Mechanismus zum Laminieren von zwei Trägerfolien (41, 42); und
eine Imprägniermaschine (160).

## Revendications

1. Procédé de fabrication d'un composé de moulage en feuille comprenant :
(i) l'extraction d'un film support (41) d'un rouleau et le fait d'amener le film support (41) à se déplacer de telle sorte qu'une direction de largeur du film support (41) soit maintenue horizontal ;
(ii) lorsqu'une direction qui est horizontale et qui est perpendiculaire à une direction de déplacement du film support (41) est désignée par direction T, l'apport d'une pluralité de faisceaux continus (10) de fibres de carbone agencés parallèlement les uns aux autres à un hacheur (130) comprenant un rouleau de coupe (131) présentant un axe de rotation parallèle à la direction T, et la coupe de chacun des faisceaux continus (10) de fibres de carbone en utilisant le hacheur (130) ;
(iii) le dépôt d'un mat (30) de fibres de carbone en laissant tomber sur le film support (41) des faisceaux hachés (20) de fibres de carbone produits par la coupe, après leur traitement par fragmentation en utilisant un appareil de traitement par fragmentation (140) qui est agencé sous le hacheur (130) ;
(iv) l'imprégnation du mat (30) de fibres de carbone avec une composition de résine thermodurcissable ; et
(v) l'agencement d'une séparation (150) séparant un espace le long de la direction T, l'espace étant celui par lequel tombent les faisceaux hachés (20) de fibres de carbone traités par fragmentation,
dans lequel, dans au moins une partie de la séparation (150), une normale est inclinée par rapport à la direction T dans un plan horizontal, et
**caractérisé en ce que**
la séparation (150) est une plaque plane et, dans au moins une partie de la séparation (150), une direction d'épaisseur de celle-ci est inclinée par rapport à la direction T, une ligne normale de la séparation (150) étant inclinée par rapport à la direction T dans un plan horizontal.

2. Procédé de fabrication selon la revendication 1,
dans lequel un angle (θ) de l'inclinaison est de 1° ou plus et de 45° ou moins.

3. Procédé de fabrication selon la revendication 1 ou la revendication 2,
dans lequel l'appareil de traitement par fragmentation (140) comprend un rouleau à picots (141, 142) ou un rouleau à galets (241), et
le rouleau à picots (141, 142) ou le rouleau à galets (241) présente un axe de rotation parallèle à la direction T.

4. Procédé de fabrication selon la revendication 1 ou la revendication 2,
dans lequel l'appareil de traitement par fragmentation (140) présente un premier rouleau à picots (141) et un deuxième rouleau à picots (142), qui sont agencés côte à côte dans une direction perpendiculaire à la direction T et présentent chacun un axe de rotation parallèle à la direction T, et
la séparation (150) présente une partie prise en sandwich entre un plan vertical incluant l'axe de rotation du premier rouleau à picots (141) et un plan vertical incluant l'axe de rotation du deuxième rouleau à picots (142).

5. Procédé de fabrication selon l'une quelconque des revendications 1 à 4,
dans lequel une pluralité des séparations (150) sont alignées le long de la direction T.

6. Procédé de fabrication selon l'une quelconque des revendications 1 à 5,
dans lequel toutes les séparations (150) sont agencées à l'intérieur d'une enceinte (152).

7. Procédé de fabrication selon la revendication 6,
dans lequel au moins une partie de l'enceinte (152) est ondulée de telle sorte qu'une coupe transversale horizontale présente une forme ondulée.

8. Procédé de fabrication selon l'une quelconque des revendications 1 à 7,
dans lequel, avant le dépôt du mat (30) de fibres de carbone sur le film support (41), une pâte de résine (51) comprenant une composition de résine thermodurcissable est appliquée à une surface supérieure du film support (41), et après le dépôt du mat (30) de fibres de carbone, un autre film support (42) dans lequel une autre pâte de résine (52) comprenant une composition de résine thermodurcissable est appliquée à une surface est superposé sur un côté de surface supérieure du film support (41) pour former un stratifié (60), et, en outre,
le stratifié (60) est soumis à un pressage.

9. Appareil de dépôt de mat de fibres de carbone comprenant :
un chemin de déplacement du film support ;
un hacheur (130) agencé au-dessus du chemin de déplacement ;
un appareil de traitement par fragmentation (140) agencé entre le hacheur (130) et le chemin de déplacement ; et
une séparation (150) au moyen de laquelle un espace entre l'appareil de traitement par fragmentation et le chemin de déplacement est séparé le long d'une direction T,
dans lequel, lorsqu'une direction qui est horizontale et qui est perpendiculaire au chemin de déplacement est la direction T, le hacheur (130) comprend un rouleau de coupe (131) présentant un axe de rotation parallèle à la direction T, et, dans au moins une partie de la séparation (150), une ligne normale est inclinée par rapport à la direction T dans un plan horizontal, et
**caractérisé en ce que**
la séparation (150) est une plaque plane et, dans au moins une partie de la séparation (150), une direction d'épaisseur de celle-ci est inclinée par rapport à la direction T, une ligne normale de la séparation (150) étant inclinée par rapport à la direction T dans un plan horizontal.

10. Appareil de dépôt de mat de fibres de carbone selon la revendication 9,
dans lequel un angle (θ) de l'inclinaison est de 1° ou plus et de 45° ou moins.

11. Appareil de dépôt de mat de fibres de carbone selon la revendication 9 ou la revendication 10,
dans lequel l'appareil de traitement par fragmentation (140) comprend un rouleau à picots (241, 242) ou un rouleau à galets (241), et
le rouleau à picots (241, 242) ou le rouleau à galets (241) présente un axe de rotation parallèle à la direction T.

12. Appareil de dépôt de mat de fibres de carbone selon la revendication 9 ou la revendication 10,
dans lequel l'appareil de traitement par fragmentation (140) présente un premier rouleau à picots (141) et un deuxième rouleau à picots (142), qui sont agencés côte à côte dans une direction perpendiculaire à la direction T et présentent chacun un axe de rotation parallèle à la direction T, et
la séparation (150) présente une partie prise en sandwich entre un plan vertical incluant l'axe de rotation du premier rouleau à picots (141) et un plan vertical incluant l'axe de rotation du deuxième rouleau à picots (142).

13. Appareil de dépôt de mat de fibres de carbone selon l'une quelconque des revendications 9 à 12,
dans lequel une pluralité des séparations (150) sont alignées le long de la direction T.

14. Appareil de dépôt de mat de fibres de carbone selon l'une quelconque des revendications 9 à 13,
dans lequel toutes les séparations (150) sont agencées à l'intérieur d'une enceinte (152).

15. Appareil de dépôt de mat de fibres de carbone selon la revendication 14,
dans lequel au moins une partie de l'enceinte (152) est ondulée de telle sorte qu'une coupe transversale horizontale présente une forme ondulée.

16. Appareil (100) de fabrication de composé de moulage en feuille comprenant :
l'appareil de dépôt de mat de fibres de carbone selon l'une quelconque des revendications 9 à 15.

17. Appareil (100) de fabrication de composé de moulage en feuille selon la revendication 16, comprenant en outre :
deux applicateurs (110, 120) ;
un mécanisme pour stratifier deux films supports (41, 42) ; et
une machine d'imprégnation (160).
